(19) Europäisches Patentamt
European Patent Office
Office européen des brevets

(11) Publication number: **0 082 724**
**B1**

(12) # EUROPEAN PATENT SPECIFICATION

(45) Date of publication of patent specification: **28.08.85**

(51) Int. Cl.$^4$: **C 08 G 73/10**

(21) Application number: **82306847.3**

(22) Date of filing: **21.12.82**

(54) **A polyamide acid, a process for its production and a polyimide produced therefrom.**

(30) Priority: **21.12.81 JP 205099/81**
**31.05.82 JP 91295/82**

(43) Date of publication of application:
**29.06.83 Bulletin 83/26**

(45) Publication of the grant of the patent:
**28.08.85 Bulletin 85/35**

(84) Designated Contracting States:
**DE FR GB**

(56) References cited:
**GB-A-2 014 167**

(73) Proprietor: **JAPAN SYNTHETIC RUBBER CO., LTD.**
**11-24, Tsukiji-2-chome Chuo-ku**
**Tokyo (JP)**

(72) Inventor: **Oka, Hiroshi**
**1, Morigayamacho**
**Yokkaichi-shi (JP)**
Inventor: **Yoshida, Yoshinori**
**20-21, Hinaganischi-3-chome**
**Yokkaichi-shi (JP)**
Inventor: **Naitou, Yuuzi**
**JSR-Shataku 1-402, 29 Aobadai-2-chome**
**Midori-ku Yokohama-shi Kanagawa-ken (JP)**

(74) Representative: **Tubby, David George et al**
**MARKS & CLERK 57-60 Lincoln's Inn Fields**
**London WC2A 3LS (GB)**

**EP 0 082 724 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a new polyamide acid, to a process for preparing it and to a polyimide which may be produced from it.

In general, polyimides have excellent heat resistance and are quite useful as starting materials for producing films, coatings for electrical wires, adhesives, coating materials and similar materials for use at high temperatures. Known polyimides are commonly produced by reacting an aromatic tetracarboxylic acid dianhydride (such as pyromellitic anhydride) with a diamine in a solvent (such as *N,N*-dimethylformamide, *N,N*-dimethylacetamide or *N*-methyl-2-pyrrolidone) to give a polyamide acid, which is then subjected to dehydration with ring-closure by, for example, heating.

However, conventional aromatic polyimides have the disadvantage that the aromatic polyamide acid used as a precursor has very poor storage stability and, when such acids are stored at room temperature, their molecular weight decreases and they become insoluble in commonly used solvents after the dehydration and ring-closure has progressed to a small extent; as a result, in some cases, solutions of these acids become turbid if stored for long periods of time. In order to prevent this, solutions of conventional aromatic polyamide acids must normally be stored at 10°C or below and are, therefore, inconvenient to handle.

We have now discovered a novel class of polyamide acids which remain soluble in suitable solvents even after partial imidization has occurred and which are quite stable and easy to use in the form of a solution; such solutions also have excellent storage stability. Moreover, the polyimides obtained by subjecting such a polyamide acid to dehydration and ring-closure have excellent heat resistance, mechanical properties, electrical properties and chemical resistance.

The present invention consists in a polyamide acid having a structure derivable from the reaction of 2,3,5-tricarboxycyclopentaneacetic acid (hereinafter referred to as "TCA") or its anhydride with a diamine.

The invention further consists in a process for producing said polyamide acid by reacting TCA or its anhydride with a diamine in a solvent.

The invention still further provides a polyimide having a structure derivable by heating said polyamide acid and a process for preparing said polyimide by heating said polyamide acid.

TCA can be prepared, for example, by the ozonolysis of dicyclopentadiene, followed by oxidising the ozonised product with hydrogen peroxide [as described in British Patent No. 872,355 and J. Org. Chem., *28,* 2537 (1963)] or by hydrating dicyclopentadiene and then oxidising the resulting hydroxy-substituted dicyclopentadiene with nitric acid (as described in West German Patent No. 1,078,120). It is also possible to use an anhydride of TCA, usually the dianhydride.

The diamine which is reacted with TCA or its anhydride is preferably a compound which may be represented by the general formula $H_2N—R—NH_2$, in which R represents a divalent aromatic group, a divalent aliphatic hydrocarbon group or a divalent alicyclic hydrocarbon group.

In this formula, R preferably represents: an aromatic hydrocarbon group, which may be represented by one of the formulae:

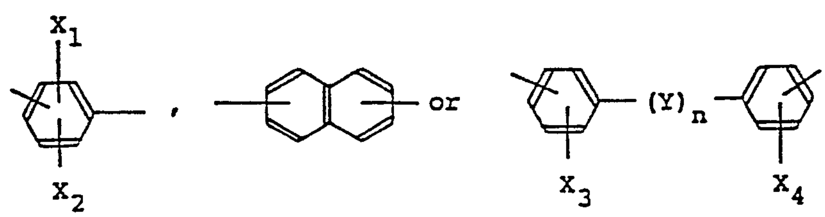

(wherein

$X_1$, $X_2$, $X_3$ and $X_4$ are the same or different and each represents a hydrogen atom or a methyl group,

Y represents $>CH_2$, $>C_2H_4$, $-O-$, $-S-$, $-C(CH_3)_2-$, $-C(CF_3)_2-$, $>SO_2$ or $-CONH-$,

and *n* represents 0 or 1); an aliphatic or alicyclic hydrocarbon group having from 2 to 13 carbon atoms and represented by the formulae $—(CH_2)_m—$ (in which *m* represents an integer from 2 to 9),

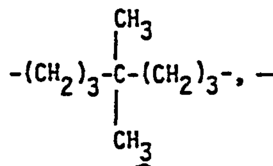, 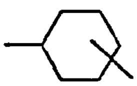, 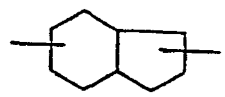,

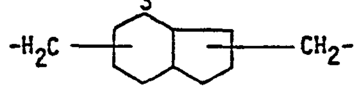 or 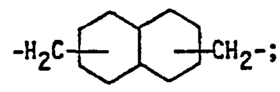;

or a hydrocarbon group derived from norbornane. Of these, we particularly prefer the aromatic hydrocarbon groups, as the resulting polyimide has particularly good heat resistance.

Specific examples of these diamines include *p*-phenylenediamine, *m*-phenylenediamine, 4,4'-diaminodiphenylmethane, 4,4'-diaminodiphenylethane, 2,2-di(*p*-aminophenyl)hexafluoropropane, benzidine, 4,4'-diaminodiphenyl sulphide, 4,4'-diaminodiphenyl sulphone, 4,4'-diaminodiphenyl ether, 1,5-diaminonaphthalene, 4,4'-diamino-3,3'-dimethylbiphenyl, 3,4'-diaminobenzanilide, 3,4'-diaminodiphenyl ether, *m*-xylylenediamine, *p*-xylylenediamine, ethylenediamine, propanediamine, tetramethylenediamine, hexamethylenediamine, heptamethylenediamine, octamethylenediamine, nonamethylenediamine, 4,4-dimethylheptamethylenediamine, 1,4-diaminocyclohexane, tetrahydrodicyclopentadienylenediamine, hexahydro-4,7-methanoindanylenedimethylenediamine and tricyclo[6,2,1,$0^{2,7}$]undecylenedimethyldiamine. A single one of these diamines or a mixture of any two or more thereof may be employed.

Suitable solvents for use in the process of the invention are capable of dissolving both TCA or its anhydride and the diamine, as this enables the molecular weight of the polyamide acid to be increased. Specifically, aprotic dipole polar solvents are preferred and examples of such solvents include *N*-methyl-2-pyrrolidone (hereinafter referred to as "NMP"), *N,N*-dimethylformamide, *N,N*-dimethylacetamide, dimethyl sulphoxide, tetramethylurea and hexamethylphosphoric triamide. However, in general, any organic solvents can be used, including alcohols, phenols, ketones and ethers, for example ethanol, isopropanol, ethylene glycol, propylene glycol, 1,4-butanediol, triethylene glycol, ethylene glycol monomethyl ether, phenol, cresol, methyl ethyl ketone or tetrahydrofuran.

The TCA or anhydride thereof and the diamine are preferably employed in essentially equimolar amounts, although the proportion of diamine may be varied both above and below equimolar, if desired. In order to achieve a high molecular weight polyamide acid, the diamine is normally employed in an amount of from 0.7 to 1.3 moles per mole of TCA or anhydride thereof. The amount of solvent is preferably from 0.5 to 20 times the total weight of TCA or anhydride thereof and diamine.

The reaction temperature for producing the polyamide acid will vary, depending upon whether the starting material is TCA or TCA anhydride. If the starting material is TCA, the reaction is usually carried out at a temperature within the range from 50 to 300°C, a temperature within the range from 100 to 250°C being effective and preferred. If TCA anhydride is the starting material, the reaction is a polyaddition and it is therefore unnecessary to carry it out at a high temperature; in this case, the reaction temperature is usually in the range from 0 to 100°C. The polyamide acids thus obtained are readily soluble in the preferred solvents and will remain soluble even after the polyamide acid has been partially imidized. The infrared absorption spectra of these polyamide acids show a stretching vibration of the amide carbonyl group at 1 600 to 1 700 $cm^{-1}$.

Prior to its heat treatment to produce the polyamide, the polyamide acid preferably has an intrinsic viscosity, [η], of at least 0.05 dl/g, more preferably from 0.05 to 5 dl/g, as measured at 30°C in NMP. The degree of polymerization of the polyamide acid is usually from 10 to 5 000, preferably from 20 to 1 000.

A stabilizer, such as an antioxidant, may be added to the polyamide acid, preferably in an amount of from 0.01 to 5 parts by weight per 100 parts by weight of polyamide acid. Other additives, for example fillers, may also be added, for example in amounts of from 1 to 100 parts by weight per 100 parts by weight of polyamide acid.

A polyimide is produced from the polyamide acid by dehydration and ring-closure, which may be effected by directly heating the solution of polyamide acid obtained as described above and then subjecting the polyamide acid to dehydration and ring-closure whilst evaporating the solvent. Alternatively, the polyamide acid may be coagulated by the addition of a non-solvent and then the coagulated polyamide acid may be moulded and heated to effect dehydration and ring-closure. Alternatively, the coagulated polyamide acid may be again dissolved in a solvent, after which the solution is heated and the polyamide acid is subjected to dehydration and ring-closure whilst evaporating the solvent. The heating temperature to produce the polyamide is preferably in the range from 100 to 500°C. Examples of solvents used for dissolving the polyamide acid include the aprotic dipole polar solvents mentioned above, aqueous alkaline solutions and similar liquids. The method of moulding the polyimide will vary, depending upon its intended use. For example, a solution of the polyamide acid may be coated on a support or a fibrous mat (e.g. of glass fibres) may be impregnated with the solution, after which the coated support or impregnated mat is gradually heated until the temperature reaches a value within the range from 250 to 400°C, to give a transparent and tough polyimide film or a fibre-reinforced polyimide sheet. The infrared absorption spectra of these polyimides show absorptions due to the stretching

vibration of the imide carbonyl groups at two positions, namely at 1 650—1 730 $cm^{-1}$ and at 1 730—1 790 $cm^{-1}$.

The polyimide of the present invention has many excellent properties, including heat resistance, mechanical properties, electrical properties, chemical resistance and adhesive properties. It is useful as, for example, a highly heat-resistant film, as an adhesive or as a coating material. Specifically, it can be used as a base board for printed circuits, as a base board for flexible circuits, as a surface-protecting film or insulating film between layers for semi-conductor integral circuit elements, as a coating material for enamelled electrical wires, in various laminates or in gaskets.

The invention is further illustrated by the following Examples and with reference to the accompanying drawings, of which Figures 1, 3, 5, 6, 8 and 10—15 show the infrared absorption spectra of polyamide acids obtained in the Examples and Figures 2, 4, 7 and 9 illustrate infrared absorption spectra of polyimides obtained in the Examples.

Example 1

Under a nitrogen atmosphere, 19.8 g (0.1 mole) of 4,4'-diaminodiphenylmethane were dissolved in 200 ml of NMP, and then 22.4 g (0.1 mole) of TCA dianhydride were added at 25°C to the resulting solution. The mixture was then stirred for 2 hours to allow it to react. At the end of this time, the mixture was charged into acetone to coagulate the polymer, and the coagulated polymer was dried, to give 41 g of a polyamide acid powder having an intrinsic viscosity [η] of 0.58 dl/g, as measured at 30°C in NMP. Another sample of the polyamide acid solution obtained as described above was allowed to stand for 30 days at 25°C; at the end of this time, no decrease in viscosity could be observed and there was no noticeable deposition of insoluble matter, indicated by opacity or the like.

The infrared absorption spectrum of this polyamide acid is shown in Figure 1. It has an absorption due to the amide carbonyl at 1 660 $cm^{-1}$ and an absorption due to the out-of-plane deformation vibration of the 1,4-disubstituted aromatic C—H at 815 $cm^{-1}$. The carboxyl group content of the polyamide acid was determined by alkali titration and the degree of imidization was calculated from the carboxyl group content and found to be 0. The term "degree of imidization" used herein means the proportion of imide linkages in the polyamide acid.

Elemental analysis of the polyamide acid gave the following results:

Found : C, 65.0%; H, 5.1%; N, 6.8%.
Calculated : C, 65.4%; H, 5.2%; N, 6.6%.

20 g of this polyamide acid powder were dissolved in 30 g of *N,N*-dimethylacetamide, to produce a 40% by weight solution. A portion of this solution was spin-coated onto a glass plate and heated for 1 hour at 120°C and then for 30 minutes at 350°C, to give a transparent polyimide film having a thickness of 20 μm. The properties of this film were measured and the results are shown in Table 1.

The infrared absorption spectrum of the polyimide film is shown in Figure 2. It has absorptions due to the imide carbonyl at about 1 780 $cm^{-1}$ and 1 700 $cm^{-1}$, an absorption due to the stretching vibration of the aromatic C—H at 3 040 $cm^{-1}$ and an absorption due to the out-of-plane deformation vibration of the 1,4-disubstituted aromatic C—H at 815 $cm^{-1}$.

Elemental analysis of the polyimide gave the following results:

Found : C, 71.0%; H, 4.6%; N, 7.4%.
Calculated : C, 71.5%; H, 4.7%; N, 7.2%.

Example 2

The reaction described in Example 1 was repeated, except that the 4,4'-diaminodiphenylmethane was replaced by 20 g (0.1 mole) of 4,4'-diaminodiphenyl ether, to give a polyamide acid solution. When a sample of this solution was allowed to stand for 30 days at 25°C, there was no decrease in viscosity and no visible deposition of insoluble matter, for example opacification. The solution obtained from the reaction was charged into acetone to coagulate the polymer and the coagulated polymer was dried to give 41 g of polyamide acid powder having an intrinsic viscosity [η] of 0.52 dl/g, measured at 30°C in NMP.

The infrared absorption spectrum of this polyamide acid is shown in Figure 3. It has an absorption due to the amide carbonyl at 1 660 $cm^{-1}$ and an absorption due to the out-of-plane deformation vibration of the 1,4-disubstituted aromatic C—H at 840 $cm^{-1}$. The degree of imidization was 0.

Elemental analysis of the polyamide acid gave the following results:

Found : C, 61.8%; H, 4.6%; N, 6.8%.
Calculated : C, 62.3%; H, 4.7%; N, 6.6%.

This polyamide acid powder was treated as described in Example 1 to give a transparent polyimide film having the properties shown in Table 1.

The infrared absorption spectrum of this polyimide film is shown in Figure 4. It has absorptions due to the amide carbonyl group at about 1 780 $cm^{-1}$ and 1 700 $cm^{-1}$, an absorption due to the aromatic C—H

stretching vibration at 3 040 $cm^{-1}$, an absorption due to the out-of-plane deformation vibration of the 1,4-disubstituted aromatic C—H at 825 $cm^{-1}$ and an absorption due to the antisymmetric stretching vibration of C—O—C at about 1 220 $cm^{-1}$.

Elemental analysis of the polyimide gave the following results:

| | | | | |
|---|---|---|---|---|
| Found | : | C, 67.5%; | H, 4.0%; | N, 7.4%. |
| Calculated | : | C, 68.1%; | H, 4.1%; | N, 7.2%. |

Example 3

20 g (0.1 mole) of 4,4'-diaminodiphenyl ether and 26 g (0.1 mole) of TCA were dissolved in 100 ml of NMP and reacted at 190°C for 2 hours, while distilling off the water formed by the reaction. The reaction mixture was then charged into water to coagulate the resulting polymer and the coagulated polymer was dried, to give 44 g of polyamide acid powder having an intrinsic viscosity [η] of 0.32 dl/g, measured at 30°C in NMP, and a degree of imidization of 30%.

The infrared absorption spectrum of this polyamide acid is shown in Figure 5. It has an absorption due to the amide carbonyl at 1 660 $cm^{-1}$, absorptions due to the imide carbonyl at 1 $780^{-1}$ and 1 700 $cm^{-1}$ and an absorption due to the out-of-plane deformation vibration of the 1,4-disubstituted aromatic C—H at 830 $cm^{-1}$.

This polyamide acid powder was dissolved in NMP to obtain a 40% by weight solution, which was allowed to stand at room temperature for 30 days; at the end of this time, there was no decrease in viscosity nor any deposition of insoluble matter, for example opacification. A polyimide film was obtained from a similar solution, as described in Example 1. The infrared absorption spectrum of this film was the same as that of the polyamide of Example 2.

Example 4

Under a nitrogen atmosphere, 11.6 g (0.1 mole) of hexamethylenediamine were dissolved in 200 ml of NMP and the solution was stirred. 22.4 g (0.1 mole) of TCA dianhydride were added to and suspended in this solution at 25°C. The suspension was heated to 50°C and reacted for 3 hours, after which the reaction mixture was charged into acetone to coagulate the resulting polymer. The coagulated polymer was dried, giving 33 g of a polyamide acid powder having an intrinsic viscosity [η] of 1.4 dl/g, measured at 30°C in NMP containing 0.02% by weight of sodium chloride.

When a solution prepared as described above was allowed to stand for 30 days at 25°C, no drop in viscosity was observed, nor was there any deposition of insoluble matter, for example opacification.

The infrared absorption spectrum of this polyamide acid shows an absorption due to the amide carbonyl at 1640 $cm^{-1}$. The carboxyl group content of the polyamide acid was determined by alkali titration and the degree of imidization was calculated from this carboxyl group content to be 0. Elemental analysis of the polyamide acid gave the following results:

| | | | | |
|---|---|---|---|---|
| Found | : | C, 56.1%; | H, 7.0%; | N, 8.4%. |
| Calculated | : | C, 56.5%; | H, 7.1%; | N, 8.2%. |

10 g of this polyamide acid powder were dissolved in 30 g of *N,N*-dimethylformamide, to give a 25% by weight solution and a portion of this solution was spin-coated onto a glass plate and heated for 1 hour at 120°C, then for 1 hour at 200°C and finally for 30 minutes at 350°C, to give a light brown, transparent polyimide film having a thickness of 20 μm. The properties of this film were measured and the results are shown in Table 1.

The infrared absorption spectrum of this polyimide is shown in Figure 7. It showed absorptions due to the imide carbonyl at 1780 $cm^{-1}$ and 1700 $cm^{-1}$. Elemental analysis of the polyimide gave the following results:

| | | | | |
|---|---|---|---|---|
| Found | : | C, 62.8%; | H, 6.7%; | N, 9.4%. |
| Calculated | : | C, 63.2%; | H, 6.6%; | N, 9.2%. |

Example 5

The procedure described in Example 4 was repeated, except that the hexamethylenediamine was replaced by 19.4 g (0.1 mole) of hexahydro-4,7-methanoindanylenedimethylenediamine, to give 41 g of a polyamide acid powder having an intrinsic viscosity [η] of 0.47 dl/g, measured at 30°C in NMP containing 0.02% by weight of sodium chloride. A solution of the polyamide powder produced by a similar reaction was allowed to stand for 30 days at 25°C, after which no drop in viscosity was observed and there was no deposition of insoluble matter, such as opacification.

The infrared absorption spectrum of this polyamide acid is shown in Figure 8. There was an absorption due to the amide carbonyl at 1640 $cm^{-1}$. The degree of imidization was 0. Elemental analysis of the polyamide acid gave the following results:

Found : C, 68.7%; H, 6.7%; N, 7.5%.
Calculated : C, 69.1%; H, 6.8%; N, 7.3%.

Example 6

11.6 g (0.1 mole) of hexamethylenediamine and 26 g (0.1 mole) of TCA were dissolved in 100 ml of NMP and reacted at 190°C for 2 hours, whilst distilling off the water formed by the reaction. The reaction mixture was then charged into water to coagulate the resulting polymer and the coagulated polymer was dried, giving 30 g of a polyamide acid powder having an intrinsic viscosity [η] of 0.20 dl/g, measured at 30°C in NMP containing 0.02% by weight of sodium chloride. The degree of imidization was 56%.

The infrared absorption spectrum of this polyamide acid is shown in Figure 10. There were an absorption due to the amide carbonyl at about 1640 $cm^{-1}$ and an absorption due to the imide carbonyl at 1780 $cm^{-1}$. A 25% by weight solution of this polyamide acid powder in NMP showed no drop in viscosity nor deposition of insoluble matter, such as opacification, even after standing for 30 days at 25°C.

A polyimide film was prepared from this solution, as described in Example 4. The infrared absorption spectrum of this film was the same as that of the polyimide of Example 4.

TABLE 1

| Property | Method of measurement | Example 1 | Example 2 | Example 4 | Example 5 |
|---|---|---|---|---|---|
| Heat decomposition temperature* (°C) | Thermogravimetry, in air, at temperature elevation rate of 10°C/min. | 430—440 | 430—440 | 430—440 | 430—440 |
| Tensile strength (kg/cm$^2$) | JIS K 6911 (25°C) | 1,100 | 1,100 | — | — |
| Elongation (%) | " | 10 | 10 | — | — |
| Dielectric constant | ASTM D 150 (25°C) (IKHz) | 3.0 | — | 2.5 | 3.0 |
| Dielectric tangent | " | 0.0035 | 0.0050 | 0.006 | 0.007 |
| Volume resistivity (Ω·cm) | ASTM D 257 (25°C) | $>10^{18}$ | $>10^{18}$ | $>10^{18}$ | $>10^{18}$ |

Note: * Temperature at which the rate of weight loss was △3%/10°C.

Example 7

The procedure described in Example 1 was repeated, except that the 4,4'-diaminodiphenylmethane was replaced by 21.6 g (0.1 mole) of 4,4'-diaminophenyl sulphide and that the NMP was replaced by 200 ml of *N,N*-dimethylacetamide (hereinafter referred to as "DMAc"), to give 18 g of a polyamide acid powder having an intrinsic viscosity [η] of 0.82 dl/g, measured at 30°C in NMP. When a solution obtained by a similar reaction was allowed to stand for 30 days at 25°C, no drop in viscosity or deposition of insoluble matter could be observed.

The infrared absorption spectrum of this polyamide acid is shown in Figure 11. There were an absorption due to the amide carbonyl at 1660 $cm^{-1}$ and an absorption due to the out-of-plane deformation vibration of the 1,4-disubstituted aromatic C—H at 840 $cm^{-1}$. The degree of imidization was 0. Elemental analysis of the polyamide acid gave the following results:

| | | | |
|---|---|---|---|
| Found : | C, 59.7%; | H, 4.7%; | N, 6.3%. |
| Calculated : | C, 60.6%; | H, 4.6%; | N, 6.4%. |

A transparent polyimide film was prepared from this polyamide acid powder, following the procedure described in Example 1. The infrared absorption spectrum of this polyimide film showed absorptions due to the imide carbonyl group at about 1780 $cm^{-1}$ and 1700 $cm^{-1}$, an absorption due to the stretching vibration of the aromatic C—H at 3040 $cm^{-1}$ and an absorption due to the out-of-plane deformation vibration of the 1,4-disubstituted aromatic C—H at 825 $cm^{-1}$. Elemental analysis of the polyimide gave the following results:

| | | | |
|---|---|---|---|
| Found : | C, 64.8%; | H, 4.0%; | N, 7.2%. |
| Calculated : | C, 65.4%; | H, 4.0%; | N, 6.9%. |

Example 8

The procedure described in Example 7 was repeated, except that the 4,4'-diaminodiphenyl sulphide was replaced by 10.8 g (0.1 mole) of *p*-phenylenediamine, to give 27 g of a polyamide acid powder having an intrinsic viscosity [η] of 0.73 dl/g, measured at 30°C in NMP. A solution prepared by a similar reaction showed no drop in viscosity or deposition of insoluble matter, such as opacification, even after it had stood for 30 days at 25°C.

The infrared absorption spectrum of this polyamide acid is shown in Figure 12. There were an absorption due to the amide carbonyl at 1660 $cm^{-1}$ and an absorption due to the out-of-plane deformation vibration of the 1,4-disubstituted aromatic C—H at 840 $cm^{-1}$. The degree of imidization was 0. Elemental analysis of the polyamide acid gave the following results:

| | | | |
|---|---|---|---|
| Found : | C, 58.4%; | H, 5.0%; | N, 8.3%. |
| Calculated : | C, 57.8%; | H, 4.9%; | N, 8.4%. |

A transparent polyimide film was then produced, as described in Example 1, from this polyamide acid powder. The infrared absorption spectrum of the polyimide film showed absorptions due to the imide carbonyl at about 1780 $cm^{-1}$ and 1700 $cm^{-1}$, an absorption due to the stretching vibration of the aromatic C—H at 3040 $cm^{-1}$ and an absorption due to the out-of-plane deformation vibration of the 1,4-disubstituted aromatic C—H at 825 $cm^{-1}$. Elemental analysis of the polyimide gave the following results:

| | | | |
|---|---|---|---|
| Found : | C, 65.3%; | H, 4.0%; | N, 9.7%. |
| Calculated : | C, 64.9%; | H, 4.1%; | N, 9.5%. |

Example 9

The procedure described in Example 7 was repeated, except that the 4,4'-diaminodiphenyl sulphide was replaced by 10.8 g (0.1 mole) of *m*-phenylenediamine, to give 41 g of a polyamide acid powder having an intrinsic viscosity [η] of 0.44 dl/g, measured at 30°C in NMP. A similar solution produced by the same reaction showed no drop in viscosity or deposition of insoluble matter, such as opacification, even after standing for 30 days at 25°C.

The infrared absorption spectrum of this polyamide acid is shown in Figure 13. There was an absorption due to the amide carbonyl at 1660 $cm^{-1}$. The degree of imidization was 0. Elemental analysis of the polyamide acid gave the following results:

| | | | |
|---|---|---|---|
| Found : | C, 57.6%; | H, 4.8%; | N, 8.6%. |
| Calculated : | C, 57.8%; | H, 4.9%; | N, 8.4%. |

A transparent polyimide film was then prepared from this polyamide acid powder, as described in Example 1. The infrared absorption spectrum of this polyimide film showed absorptions due to the imide carbonyl at about 1780 $cm^{-1}$ and 1700 $cm^{-1}$ and an absorption due to the stretching vibration of the aromatic C—H at 3040 $cm^{-1}$. Elemental analysis of the polyamide gave the following results:

Found : C, 65.4%; H, 4.2%; N, 9.4%.
Calculated : C, 64.9%; H, 4.1%; N, 9.5%.

Example 10

The procedure described in Example 7 was repeated, except that the 4,4'-diaminodiphenyl sulphide was replaced by 13.6 g (0.1 mole) of *p*-xylylenediamine, to give 41 g of polyamide acid powder having an intrinsic viscosity [η] of 0.32 dl/g, measured at 30°C in NMP. A similar solution produced by the same reaction showed no drop in viscosity or deposition of insoluble matter, even after standing for 30 days at 25°C.

The infrared spectrum of this polyamide acid is shown in Figure 14. There were an absorption due to the amide carbonyl at 1660 $cm^{-1}$ and an absorption due to the out-of-plane deformation vibration of the 1,4-disubstituted aromatic C—H at 840 $cm^{-1}$. The degree of imidization was 0. Elemental analysis of the polyamide acid gave the following results:

Found : C, 60.8%; H, 5.6%; N, 7.3%.
Calculated : C, 60.0%; H, 5.6%; N, 7.8%.

A transparent polyimide film was produced from this polyamide acid powder, following the procedure described in Example 1. The infrared absorption spectrum of this polyimide film showed absorptions due to the imide carbonyl at about 1780 $cm^{-1}$ and 1700 $cm^{-1}$, an absorption due to the stretching vibration of the aromatic C—H at 3040 $cm^{-1}$ and an absorption due to the out-of-plane deformation vibration of the 1,4-disubstituted aromatic C—H at 825 $cm^{-1}$. Elemental analysis of the polyimide gave the following results:

Found : C, 66.4%; H, 5.1%; N, 8.7%.
Calculated : C, 66.7%; H, 5.0%; N, 8.6%.

Example 11

The procedure described in Example 7 was repeated, except that the 4,4'-diaminodiphenyl sulfide was replaced by 13.6 g (0.1 mole) of *m*-xylylenediamine, to give 41 g of a polyamide acid powder having an intrinsic viscosity [η] of 0.52 dl/g, measured at 30°C in NMP. A similar solution produced by the same reaction showed no drop in viscosity by deposition of insoluble matter, such as opacification, even after standing for 30 days and 25°C.

The infrared absorption spectrum of this polyamide acid is shown in Figure 15. There was an absorption due to the amide carbonyl at 1660 $cm^{-1}$. The degree of imidization was 0. Elemental analysis of the polyamide acid gave the following results:

Found : C, 60.8%; H, 5.6%, N, 7.2%.
Calculated : C, 60.0%; H, 5.6%; N, 7.8%.

A transparent polyimide film was prepared from this polyamide acid, as described in Example 1. The infrared absorption spectrum of this polyimide film showed absorptions due to the imide carbonyl at about 1780 $cm^{-1}$ and 1700 $cm^{-1}$ and an absorption due to the stretching vibration of the aromatic C—H at 3040 $cm^{-1}$. Elemental analysis of the polyamide gave the following results:

Found : C, 66.5%; H, 5.2%; N, 8.4%.
Calculated : C, 66.7%; H, 5.0%; N, 8.6%.

Comparative Example

Following the procedure description in Example 1, 21.8 g (0.1 mole) of pyromellitic anhydride and 19.8 g of diaminodiphenyl ether were reacted in 260 g of *N,N*-dimethylacetamide. The intrinsic viscosity [η] of the resulting polyamide acid was 3.37 dl/g, measured at 30°C in NMP. When the solution obtained from the reaction was allowed to stand for 3 days at 25°C, the intrinsic viscosity [η] dropped to 2.30 dl/g, indicating a decrease in molecular weight. This shows that polyamide acid has poor storage stability.

**Claims**

1. A polyamide acid having a structure derivable from the reaction of 2,3,5-tricarboxycyclopentaneacetic acid or its anhydride with a diamine.

2. A polyamide acid according to Claim 1, in which said diamine is represented by the formula $H_2N—R—NH_2$, in which R represents a divalent aromatic group, a divalent aliphatic hydrocarbon group or a divalent alicyclic hydrocarbon group.

3. A polyamide acid according to Claim 2, in which R represents: an aromatic group of formula

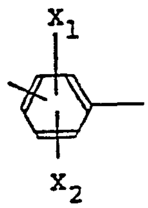 , 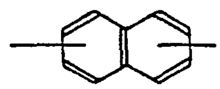 or 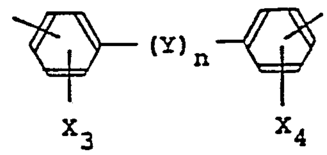

(in which $X_1$, $X_2$, $X_3$ and $X_4$ are the same or different and each represents a hydrogen atom or a methyl group,

Y represents $>CH_2$, $>C_2H_4$, —O—, —S—, 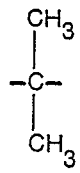, 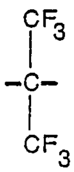, $>SO_2$ or —CONH—,

and *n* represents 0 or 1); an aliphatic hydrocarbon group of formula $-(CH_2)_m-$ (in which *m* represents an integer from 2 to 9) or

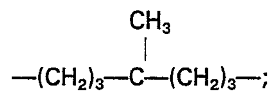;

an alicyclic hydrocarbon group of formula

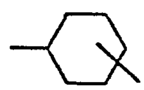 , 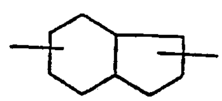 ,

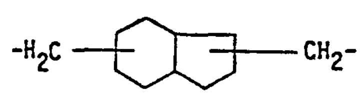 or 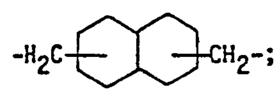;

or a hydrocarbon group derived from norbornane.

4. A polyamide acid according to Claim 1, in which said diamine is *p*-phenylenediamine, *m*-phenylenediamine, 4,4′-diaminodiphenylmethane, 4,4′-diaminodiphenylethane, 2,2-di(*p*-aminophenyl)-hexafluoropropane, benzidine, 4,4′-diaminodiphenyl sulphide, 4,4′-diaminodiphenyl sulphone, 4,4′-diaminodiphenyl ether, 1,5-diaminonaphthalene, 4,4′-diamino-3,3′-dimethylbiphenyl, 3,4′-diaminobenzanilide, 3,4′-diaminodiphenyl ether, *m*-xylylenediamine, *p*-xylylenediamine, ethylenediamine, propanediamine, tetramethylenediamine, hexamethylenediamine, heptamethylenediamine, octamethylenediamine, nonamethylenediamine, 4,4-dimethylheptamethylenediamine, 1,4-diaminocyclohexane, tetrahydrodicyclopentadienylenediamine, hexahydro-4,7-methanoindanylenedimethylenediamine or tricyclo[6,2,1,$0^{2.7}$]undecylenedimethyldiamine.

5. A polyamide acid according to any one of the preceding Claims, having an intrinsic viscosity, as measured at 30°C in *N*-methyl-2-pyrrolidone, of at least 0.05 dl/g.

6. A polyamide acid according to Claim 5, in which said intrinsic viscosity is from 0.05 to 5 dl/g.

7. A process for producing a polyamide acid as claimed in any one of Claims 1 to 6, which comprises reacting 2,3,5-tricarboxycyclopentaneacetic acid or its anhydride with a diamine in a solvent.

8. A process according to Claim 7, in which said diamine is employed in an amount of from 0.7 to 1.3 moles per mole of said 2,3,5-tricarboxycyclopentaneacetic acid or anhydride thereof.

9. A process according to Claim 8, in which said 2,3,5-tricarboxycyclopentaneacetic acid or anhydride thereof and said diamine are employed in equimolar amounts.

10. A process according to any one of Claims 7, 8 and 9, in which the amount of solvent is from 0.5 to 20 times the total weight of said 2,3,5-tricarboxycyclopentaneacetic acid or anhydride thereof and said diamine.

11. A process according to any one of Claims 7 to 10, in which the reaction is effected at a temperature of from 0 to 300°C.

12. A process according to Claim 11, in which said 2,3,5-tricarboxycyclopentaneacetic acid and said diamine are reacted at a temperature of from 50 to 300°C.

13. A process according to Claim 11, in which said 2,3,5-tricarboxycyclopentaneacetic acid anhydride and said diamine are reacted at at temperature from 0 to 100°C.

14. A process according to any one of Claims 7 to 13, in which said solvent is an aprotic dipole polar solvent.

15. A polyimide having a structure derivable by heating a polyamide acid as claimed in any one of Claims 1 to 6 or prepared by a process as claimed in any one of Claims 7 to 14.

16. A process for preparing a polyimide as claimed in Claim 15, which comprises heating a polyamide acid as claimed in any one of Claims 1 to 6 or prepared by a process as claimed in any one of Claims 7 to 14.

17. A process according to Claim 16, in which 2,3,5-tricarboxycyclopentaneacetic acid or its anhydride is reacted with a diamine in a to produce a polyamide acid solution solution, which is directly heated to produce said polyimide.

18. A process according to Claim 16, in which 2,3,5-tricarboxycyclopentaneacetic acid or its anhydride is reacted with a diamine in a solvent to produce a polyamide acid solution, which is added to a non-solvent for said polyamide acid to coagulate the polyamide acid, and the coagulated polyamide acid is moulded and then heated to produce said polyimide.

19. A process according to Claim 16, in which 2,3,5-tricarboxycyclopentaneacetic acid or its anhydride is reacted with a diamine in a solvent to produce a polyamide acid solution, said polyamide acid solution is added to a non-solvent to coagulate the polyamide acid, the coagulated polyamide acid is dissolved in a solvent, and the resulting solution is heated to produce said polyimide.

20. A process according to any one of Claims 16 to 19, in which the heating to produce said polyimide is effected at a temperature of from 100 to 500°C.

21. A process according to any one of Claims 17, 18 and 19 in which said solvent is an aprotic dipole polar solvent.

**Patentansprüche**

1. Polyamidsäure, gekennzeichnet durch eine Struktur, die sich von der Umsetzung von 2,3,5-Tricarboxycyclopentanessigsäure oder ihrem Anhydrid mit einem Diamin ableitet.

2. Polyamidsäure nach Anspruch 1, dadurch gekennzeichnet, daß das Diamin die Formel $H_2N—R—NH_2$ hat, in der R eine zweiwertige aromatische Gruppe, eine zweiwertige aliphatische Kohlenwasserstoffgruppe ist.

3. Polyamidsäure nach Anspruch 2, dadurch gekennzeichnet, daß R eine aromatische Gruppe der folgenden Formeln

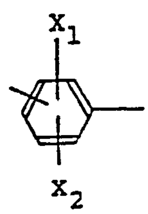 , 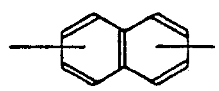 oder 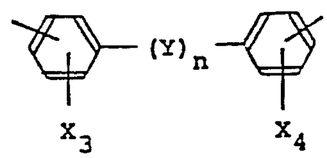

wobei $X_1$, $X_2$, $X_3$ und $X_4$ gleich oder verschieden sind und je ein Wasserstoffatom oder eine Methylgruppe sind,

Y $>CH_2$, $>C_2H_4$, $-O-$, $-S-$, 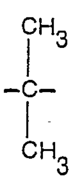, 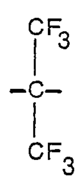, $>SO_2$ oder $-CONH-$

und n 0 oder 1 bedeuten, eine aliphatische Kohlenwasserstoffgruppe der Formel $—(CH_2)_m—$, in der m eine ganze Zahl von 2 bis 9 ist, oder

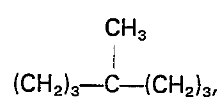

eine alicyclische Kohlenwasserstoffgruppe der Formeln

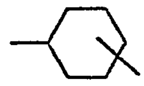, 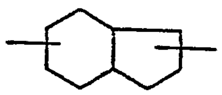,

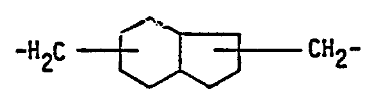 oder 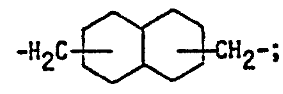;

oder eine von Norbornan abgeleitete Kohlenwasserstoffgruppe bedeutet.

4. Polyamidsäure nach Anspruch 1, dadurch gekennzeichnet, daß das Diamin p-Phenylendiamin, m-Phenylendiamin, 4,4'-Diaminodiphenylmethan, 4,4'-Diaminodiphenylethan, 2,2-Di-(p-amino-phenyl)-hexafluoropropan, Benzidin, 4,4'-Diaminodiphenylsulfid, 4,4'-Diaminodiphenylsulfon, 4,4'-Diaminodiphenylether, 1,5-Diaminonaphthalin, 4,4'-Diamino-3,3'-dimethyldiphenyl, 3,4'-Diaminobenzanilid, 3,4'-Diaminodiphenylether, m-Xylylendiamin, p-Xylyendiamin, Ethylendiamin, Propandiamin, Tetramethylendiamin, Hexamethylendiamin, Heptamethylendiamin, Octamethylendiamin, Nonamethylendiamin, 4,4-Dimethylheptamethylendiamin, 1,4-Diaminocyclohexan, Tetrahydrodicyclopentadienylendiamin, Hexahydro-4,7-methanoindanylendimethylendiamin oder Tricyclo-[6,2,1,$0^{2,7}$] undecylendimethyldiamin ist.

5. Polyamidsäure nach einem der vorstehenden Ansprüche, gekennzeichnet, durch eine Strukturviskosität, bestimmt bei 30°C in N-Methyl-2-pyrrolidon, von mindestens 0,05 dl/g.

6. Polyamidsäure nach Anspruch 5, gekennzeichnet durch eine Strukturviskosität von 0,05 bis 5 dl/g.

7. Verfahren zur Herstellung einer Polyamidsäure gemäß einem der Ansprüche 1 bis 6, gekennzeichnet durch die Umsetzung von 2,3,5-Tricarboxycyclopentanessigsäure oder ihrem Anhydrid mit einem Diamin in einem Lösungsmittel.

8. Verfahren nach Anspruch 7, dadurch gekennzeichnet, daß das Diamin in einer Menge von 0,7 bis 1,3 Mol je Mol 2,3,5-Tricarboxycyclopentanessigsäure oder ihres Anhydrids verwendet wird.

9. Verfahren nach Anspruch 8, dadurch gekennzeichnet, daß die 2,3,5-Tricarboxycyclopentanessigsäure oder ihr Anhydrid und das Diamin in äquimolaren Mengen verwendet werden.

10. Verfahren nach einem der Ansprüche 7, 8 oder 9, dadurch gekennzeichnet, daß die Menge des Lösungsmittels das 0,5 bis 20 fache des Gesamtgewichts von 2,3,5-Tricarboxycyclopentanessigsäure oder ihrem Anhydrid und dem Diamin beträgt.

11. Verfahren nach einem der Ansprüche 7 bis 10, dadurch gekennzeichnet, daß die Umsetzung bei einer Temperatur von 0 bis 300°C durchgeführt wird.

12. Verfahren nach Anspruch 11, dadurch gekennzeichnet, daß die 2,3,5-Tricarboxycyclopentanessigsäure und das Diamin bei einer Temperatur von 50 vis 300°C umgesetzt werden.

13. Verfahren nach Anspruch 11, dadurch gekennzeichnet, daß das 2,3,5-Tricarboxycyclopentanessigsäure-anhydrid und das Diamin bei einer Temperatur von 0 bis 100°C umgesetzt werden.

14. Verfahren nach einem der Ansprüche 7 bis 13, dadurch gekennzeichnet, daß das Lösungsmittel ein aprotisches dipolares Lösungsmittel ist.

15. Polyimid, gekennzeichnet durch eine Struktur, die sich von dem Erhitzen einer Polyamidsäure gemäß einem der Ansprüche 1 bis 6 oder hergestellt gemäß einem der Ansprüche 7 bis 14 ableitet.

16. Verfahren zur Herstellung eines Polyimids nach Anspruch 15, gekennzeichnet durch das Erhitzen einer Polyamidsäure gemäß einem der Ansprüche 1 bis 6 oder hergestellt gemäß einem der Ansprüche 7 bis 14.

17. Verfahren nach Anspruch 16, dadurch gekennzeichnet, daß 2,3,5-Tricarboxycyclopentanessigsäure oder ihr Anhydrid mit einem Diamin in einem Lösungsmittel zu einer Polyamidsäurelösung umgesetzt werden, die direkt zur Herstellung des Polyimids erhitzt wird.

18. Verfahren nach Anspruch 16, dadurch gekennzeichnet, daß 2,3,5-Tricarboxycyclopentanessigsäure oder ihr Anhydrid mit einem Diamin in einem Lösungsmittel zu einer Polyamidsäurelösung umgesetzt werden, die einem Nichtlösungsmittel für die Polyamidsäure zur Koagulation der Polyamidsäure zugesetzt wird, die koagulierte Polyamidsäure geformt wird und zur Herstellung des Polyimids erhitzt wird.

19. Verfahren nach Anspruch 16, dadurch gekennzeichnet, daß 2,3,5-Tricarboxycyclopentanessigsäure oder ihr Anhydrid mit einem Diamin in einem Lösungsmittel zu einer Polyamidsäurelösung umgesetzt werden, die Polyamidsäurelösung einem Nichtlösungsmittel zur Koagulation der Polyamidsäure zugesetzt wird, die koagulierte Polyamidsäure in einem Lösungsmittel gelöst wird und die entstandene Lösung zur Herstellung des Polyimids erhitzt wird.

20. Verfahren nach einem der Ansprüche 16 bis 19, dadurch gekennzeichnet, daß das Erhitzen zur Herstellung des Polyimids bei einer Temperatur von 100 bis 500°C durchgeführt wird.

21. Verfahren nach einem der Ansprüche 17, 18 und 19, dadurch gekennzeichnet, daß das Lösungsmittel ein aprotisches dipolares Lösungsmittel ist.

**Revendications**

1. Acide polyamide ayant une structure qui provient de la réaction de l'acide 2,3,5-tricarboxycyclopentaneacétique ou de son anhydride avec une diamine.

2. Acide polyamide selon la revendication 1, caractérisé en ce que ladite diamine est représentée par la formule $H_2N—R—NH_2$, dans laquelle R représente un groupe aromatique divalent, un groupe hydrocarboné aliphatique divalent ou un groupe hydrocarboné alicyclique divalent.

3. Acide polyamide selon la revendication 2, caractérisé en ce que R représente: un groupe aromatique de formule:

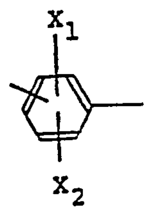 , 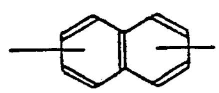 ou 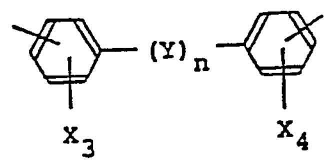

(dans laquelle $X_1$, $X_2$, $X_3$ et $X_4$ sont identiques ou différents et chacun représente un atome d'hydrogène ou un groupe méthyle,

Y représente $>CH_2$, $>C_2H_4$, $-O-$, $-S-$, $\overset{CH_3}{\underset{CH_3}{-C-}}$, $\overset{CF_3}{\underset{CF_3}{-C-}}$, $>SO_2$ ou $-CONH-$,

et $n$ est égal à 0 ou 1); un groupe hydrocarboné aliphatique de formule $—(CH_2)_m—$ dans laquelle $m$ représente un nombre entier allant de 2 à 9) ou

$$—(CH_2)_3—\overset{CH_3}{C}—(CH_2)_3—;$$

un groupe hydrocarboné alicyclique de formule:

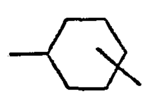 , 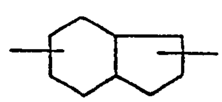 ,

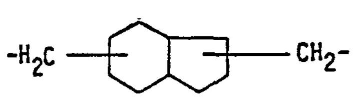 ou 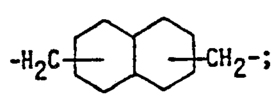 ;

ou un groupe hydrocarboné dérivé du norbornane.

4. Acide polyamide selon la revendication 1, caractérisé en ce que ladite diamine est la p-phénylènediamine, la m-phénylènediamine, le 4,4'-diaminodiphénylméthane, le 4,4'-diaminodiphényléthane, le 2,2-di(p-aminophényl)hexafluoropropane, la benzidine, le sulfure 4,4'-diaminodiphényle, la 4,4'-diaminodiphénylsulfone, le 4,4'diaminodiphényléther, le 1,5-diaminonaphtalène, le 4,4'-diamino-3,3'-diméthylbiphényle, le 3,4'-diaminobenzanilide, le 3,4'-diaminodiphényléther, la m-xylylènediamine, la p-xylylènediamine, l'éthylènediamine, la propanediamine, la tétraméthylènediamine, l'hexaméthylènediamine, l'heptaméthylènediamine, l'octaméthylènediamine, la nonaméthylènediamine, la 4,4-diméthylheptaméthylènediamine, le 1,4-diaminocyclohexane, la tétrahydrodicyclopentadiénylènediamine, l'hexahydro-4,7-méthanoindanylènediméthylènediamine ou la tricyclo-[6,2,1,$0^{2.7}$]undécylènediméthyldiamine.

5. Acide polyamide selon l'une quelconque des revendications précédentes, ayant une viscosité intrinsèque, mesurée à 30°C dans la N-méthyl-2-pyrrolidone, d'au moins 0,05 dl/g.

6. Acide polyamide selon la revendication 5, dont la viscosité intrinsèque est comprise entre 0,05 et 5 dl/g.

7. Procédé de fabrication d'un acide polyamide tel que revendiqué dans l'une quelconque des revendications 1 à 6, procédé comprenant la réaction de l'acide 2,3,5-tricarboxycyclopentaneacétique ou de son anhydride avec une diamine dans un solvant.

8. Procédé selon la revendication 7, caraćrisé en ce que ladite diamine est emploée en quantité de 0,7 à 1,3 mole par mole d'acide 2,3,5 -tricarboxycyclopentaneacétique ou de son anhydride.

9. Procédé selon la revendication 8, caractérisé en ce que l'acide 2,3,5-tricarboxycyclopentaneacétique ou son anhydride et la diamine sont employés en quantités équimolaires.

10. Procédé selon l'une quelconque des revendications 7, 8 et 9, caractérisé en ce que la quantité de solvant est comprise entre 0,5 et 20 fois le poids total d'acide 2,3,5-tricarboxycyclopentaneacétique ou de son anhydride et de diamine.

11. Procédé selon l'une quelconque des revendications 7 à 10, caractérisé en ce que la réaction est réalisée à une température de 0 à 300°C.

12. Procédé selon la revendication 11, caractérisé en ce que l'on fait réagir l'acide 2,3,5-tricarboxycyclopentaneacétique et la diamine à une température de 50 à 300°C.

13. Procédé selon la revendication 11, caractérisé en ce que l'on fait réagir l'anhydride d'acide 2,3,5-tricarboxycyclopentaneacétique et la diamine à une température de 0 à 100°C.

14. Procédé selon l'une quelconque des revendications 7 à 13, caractérisé en ce que le solvant est un solvant polaire à dipôle aprotique.

15. Polyimide ayant une structure obtenue par chauffage d'un acide polyamide tel que revendiqué dans une quelconque des revendications 1 à 6 ou préparé par un procédé tel que revendiqué dans une quelconque des revendications 7 à 14.

16. Procédé de préparation d'un polyimide tel que revendiqué dans la revendication 15, comprenant le chauffage d'un acide polyamide tel que revendiqué dans une quelconque des revendications 1 à 6 ou préparé par un procédé tel que revendiqué dans une quelconque des revendications 7 à 14.

17. Procédé selon la revendication 16, caractérisé en ce que l'on fait réagir l'acide 2,3,5-tricarboxycyclopentaneacétique ou son anhydride avec une diamine dans un solvant pour produire une solution d'acide polyamide que l'on chauffe directement pour produire ledit polyimide.

18. Procédé selon la revendication 16, caractérisé en ce que l'on fait réagir l'acide 2,3,5-tricarboxycyclopentaneacétique ou son anhydride avec une diamine dans un solvant pour produire une solution d'acide polyamide que l'on ajoute à une substance qui n'est pas un solvant dudit acide polyamide pour coaguler l'acide polyamide, on moule l'acide polyamide coagulé et ensuite on le chauffe pour produire ledit polyimide.

19. Procédé selon la revendication 16, caractérisé en ce que l'on fait réagir l'acide 2,3,5-tricarboxycyclopentaneacétique ou son anhydride avec une diamine dans un solvant pour produire une solution d'acide polyamide, on ajoute cette solution d'acide polyamide à une substance qui n'est pas un solvant pour coaguler l'acide polyamide, on dissout l'acide polyamide coagulé dans un solvant et on chauffe la solution obtenue pour produire ledit polyimide.

20. Procédé selon l'une quelconque des revendications 16 à 19, caractérisé en ce que le chauffage destiné à produire ledit polyimide se fait à une température de 100 à 500°C.

21. Procédé selon l'une quelconque des revendications 17 à 20, caractérisé en ce que ledit solvant est un solvant polaire à dipôle aprotique.

FIG. I

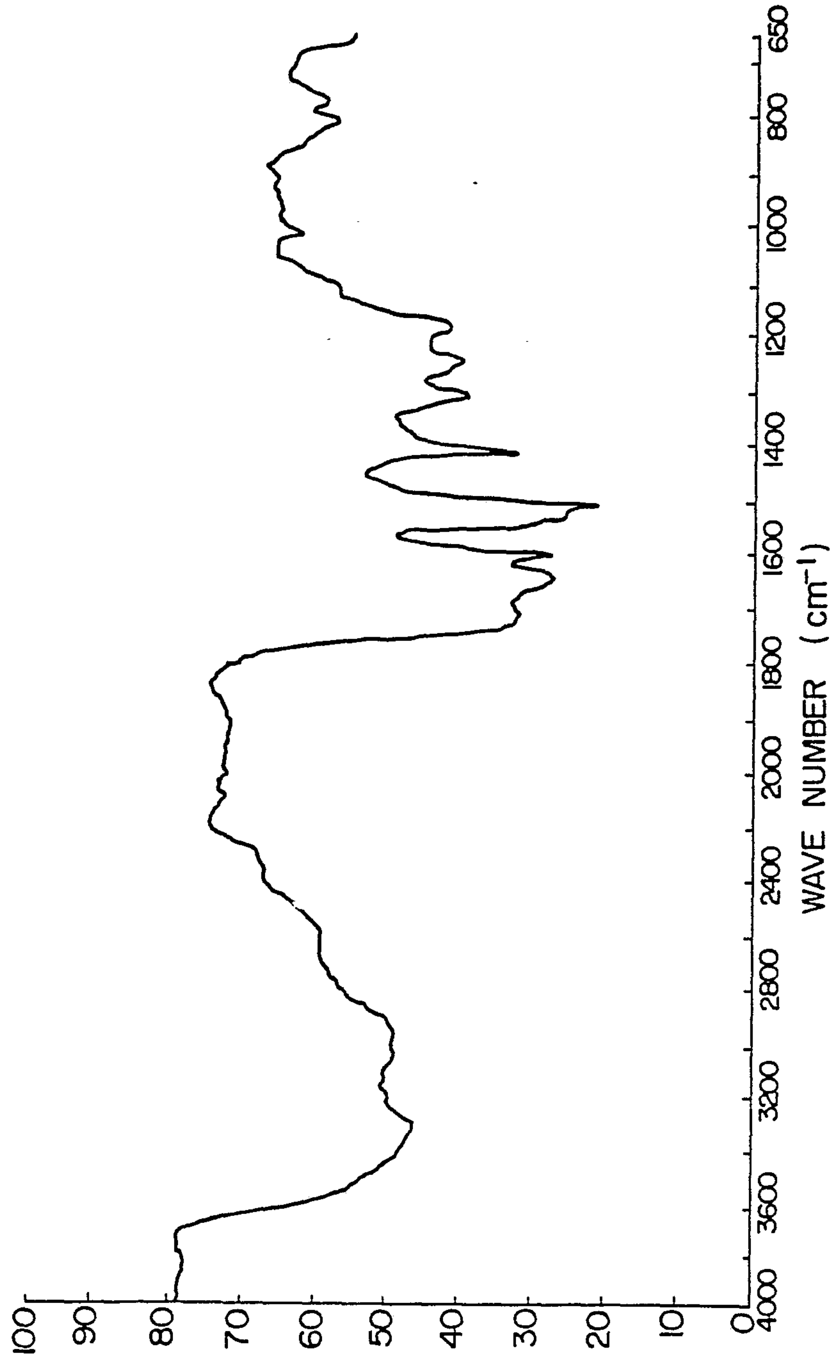
100
90
80
70
60
50
40
30
20
10
0
4000
3600
3200
2800
2400
2000
1800
1600
1400
1200
1000
800
650
WAVE NUMBER (cm$^{-1}$)

FIG. 2

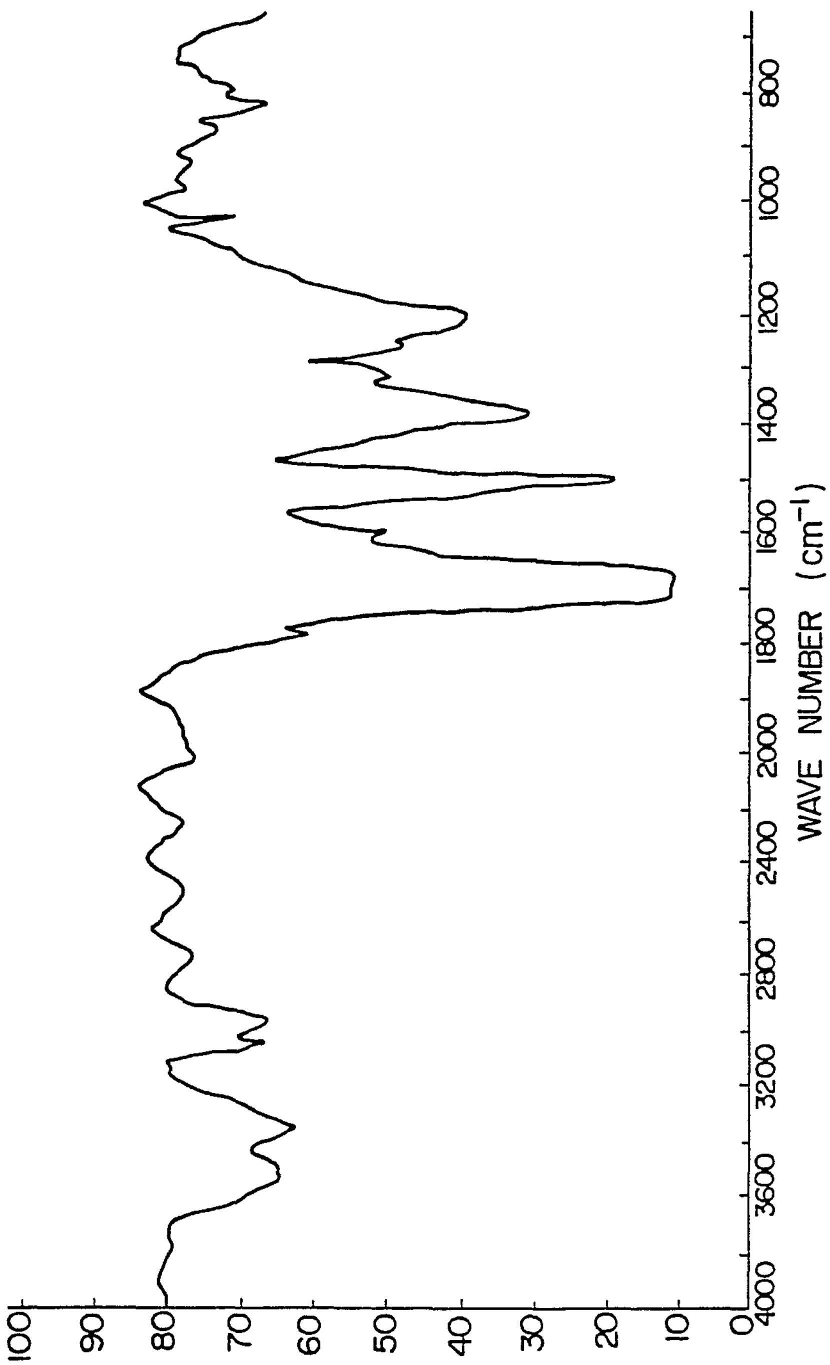
100
90
80
70
60
50
40
30
20
10
0
4000
3600
3200
2800
2400
2000
1800
1600
1400
1200
1000
800
WAVE NUMBER (cm$^{-1}$)

FIG. 3

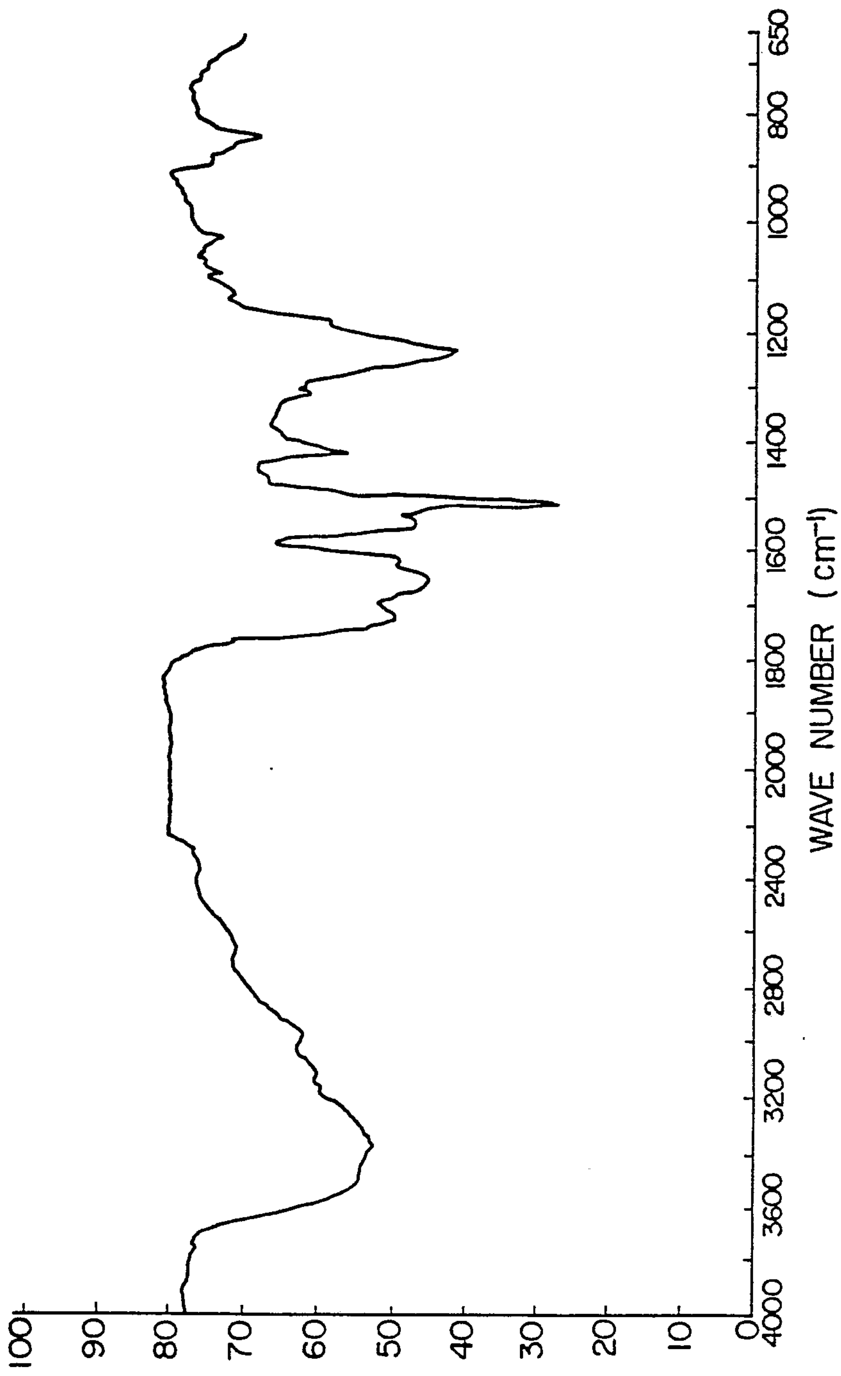

100
90
80
70
60
50
40
30
20
10
0
4000
3600
3200
2800
2400
2000
1800
1600
1400
1200
1000
800
650
WAVE NUMBER ($cm^{-1}$)

FIG. 4

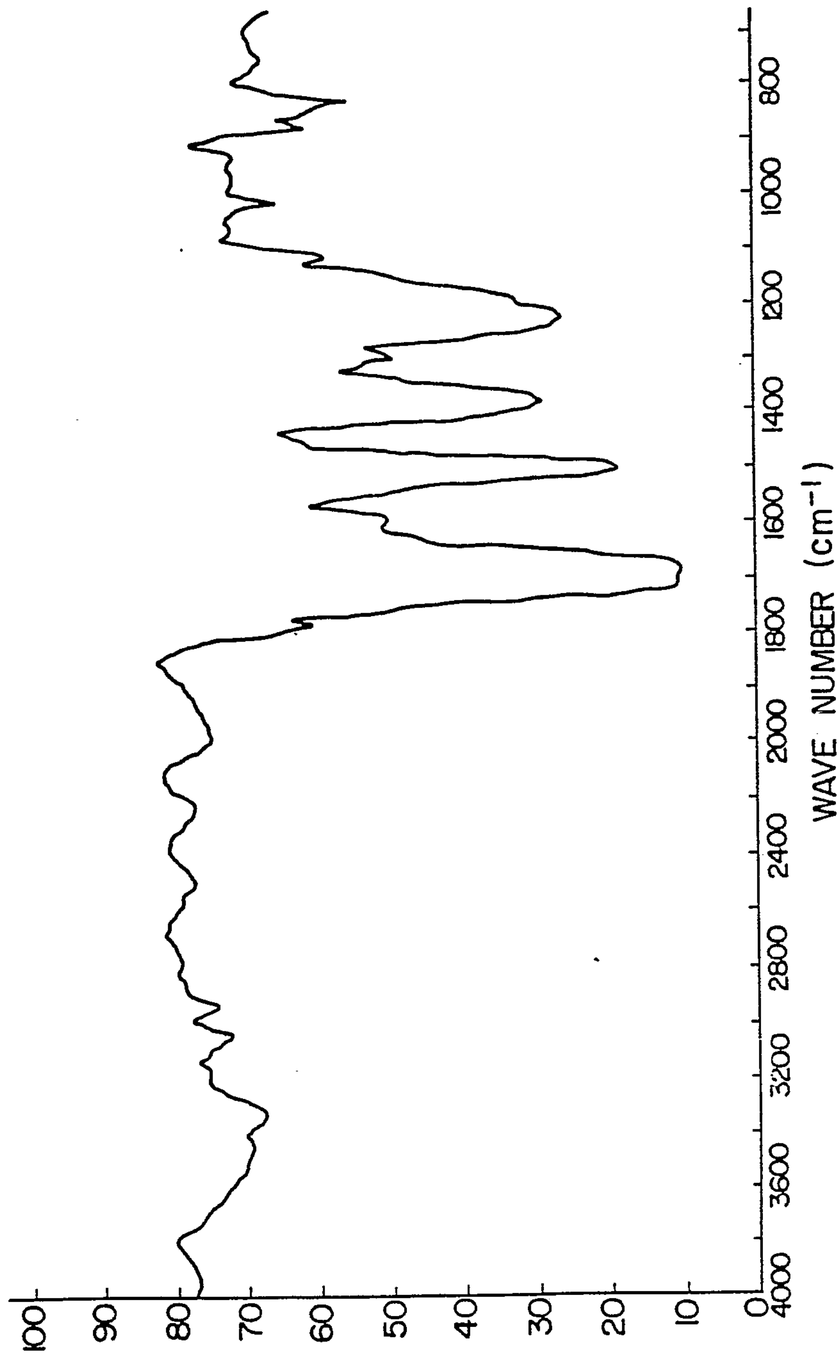

100
90
80
70
60
50
40
30
20
10
0
4000
3600
3200
2800
2400
2000
1800
1600
1400
1200
1000
800
WAVE NUMBER $(cm^{-1})$

FIG. 5

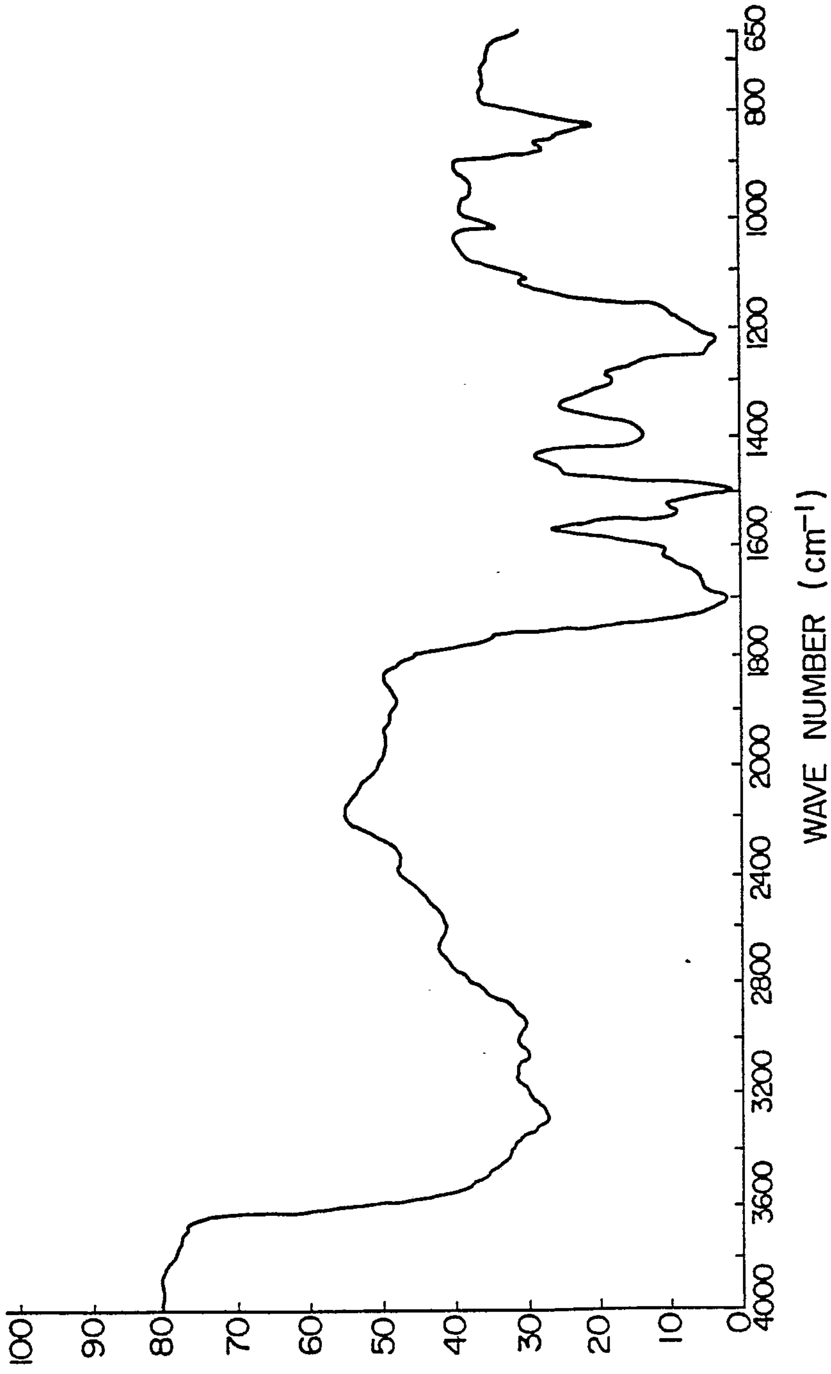
100
90
80
70
60
50
40
30
20
10
0
4000
3600
3200
2800
2400
2000
1800
1600
1400
1200
1000
800
650
WAVE NUMBER (cm-1)

FIG. 6

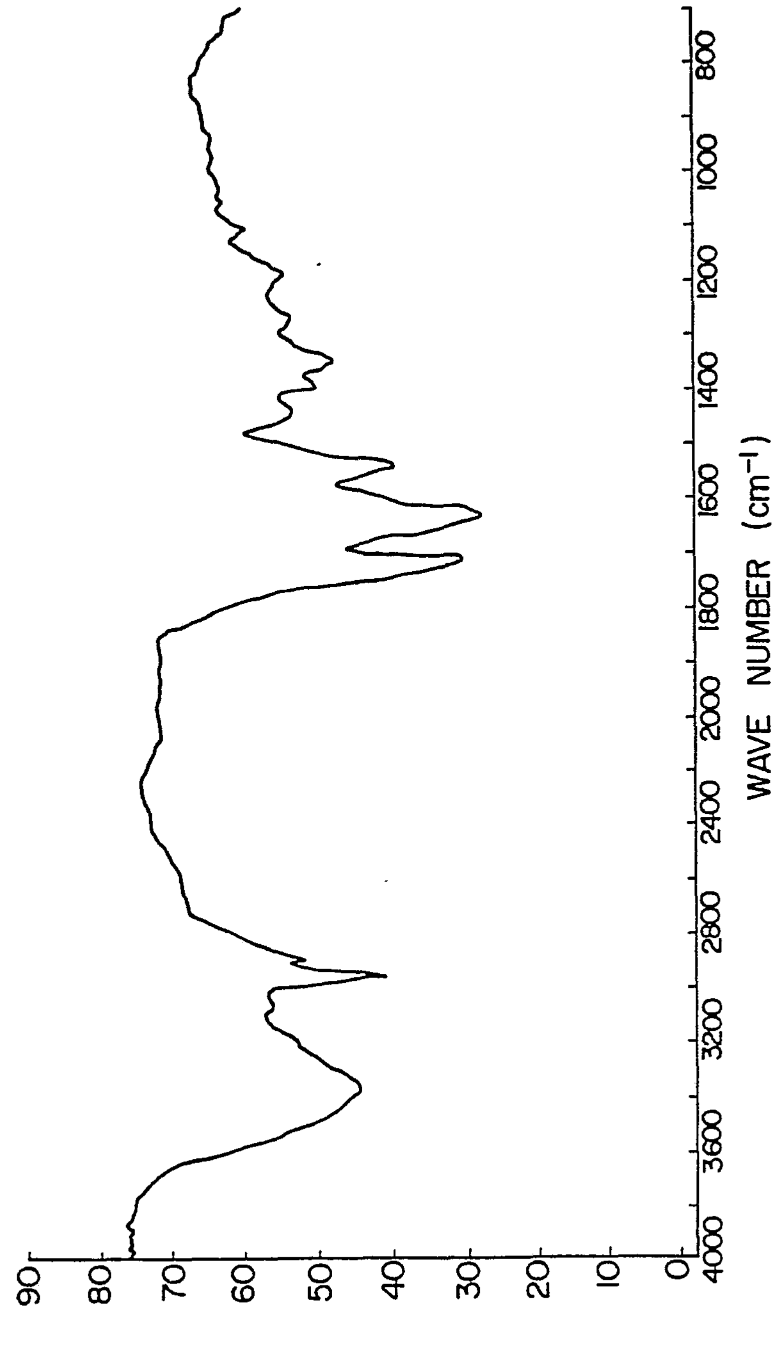
90
80
70
60
50
40
30
20
10
0
4000
3600
3200
2800
2400
2000
1800
1600
1400
1200
1000
800
WAVE NUMBER (cm-1)

FIG. 7

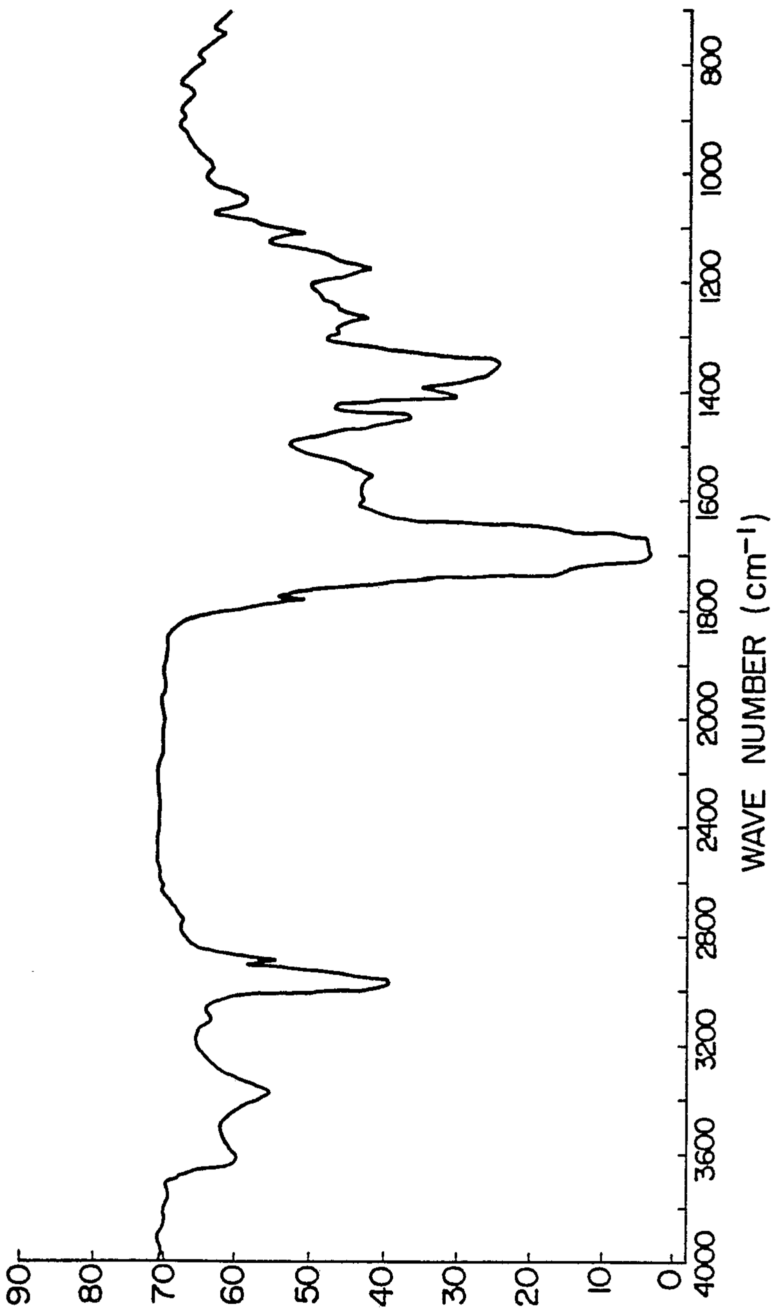
90
80
70
60
50
40
30
20
10
0
4000
3600
3200
2800
2400
2000
1800
1600
1400
1200
1000
800
WAVE NUMBER (cm⁻¹)

FIG. 8

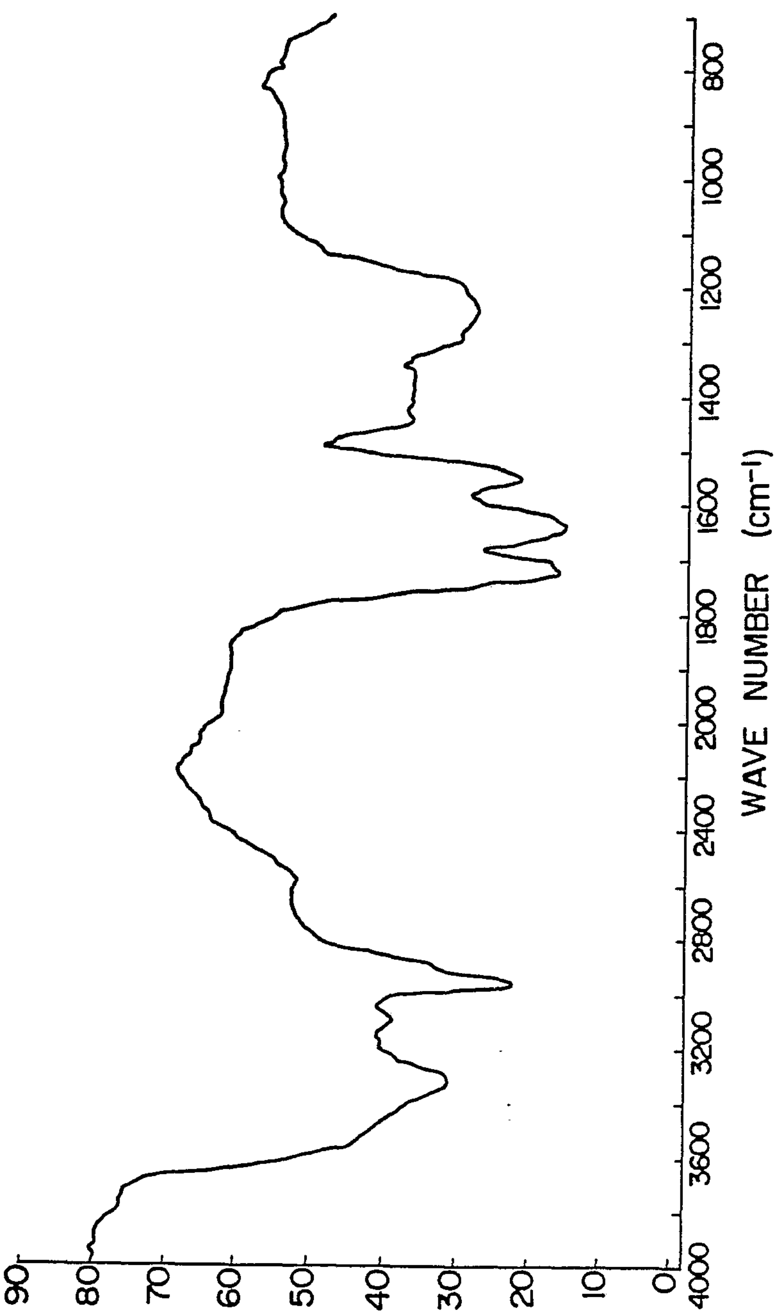
90
80
70
60
50
40
30
20
10
0
4000
3600
3200
2800
2400
2000
1800
1600
1400
1200
1000
800
WAVE NUMBER ($cm^{-1}$)

FIG. 9

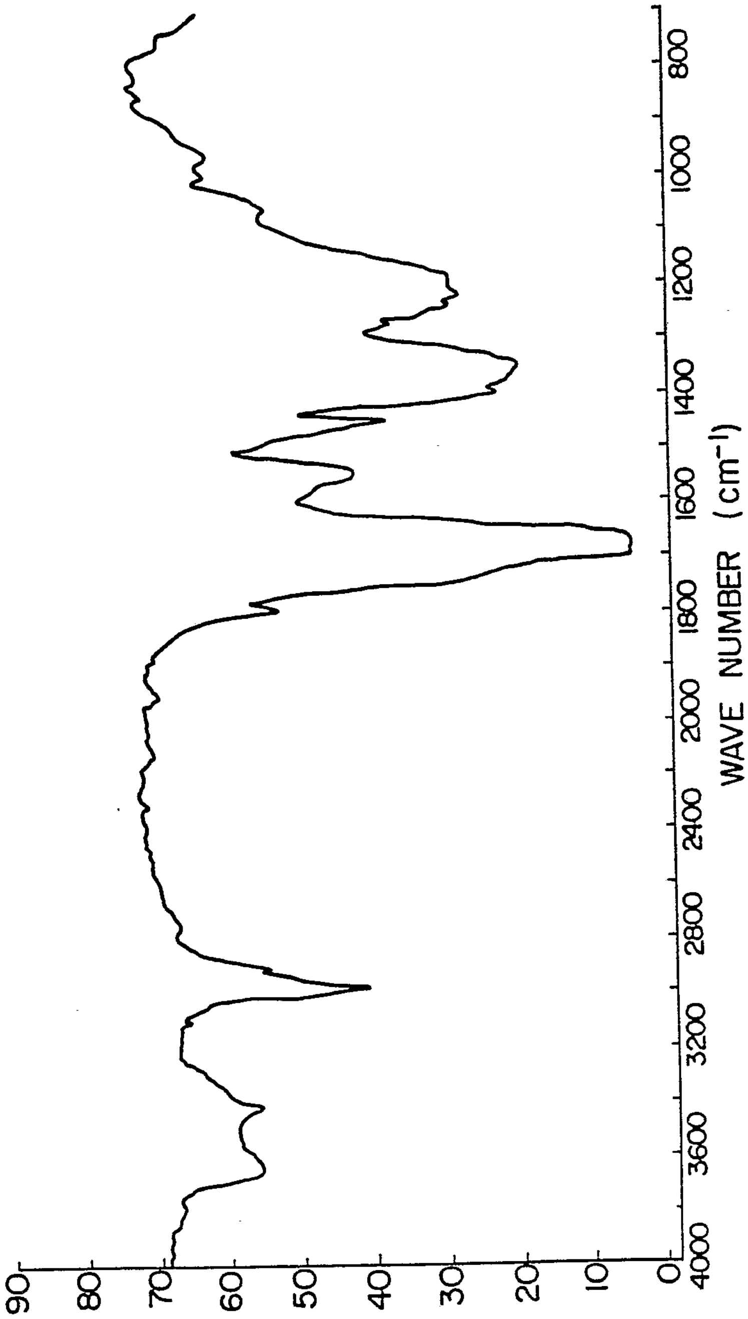
90
80
70
60
50
40
30
20
10
0
4000
3600
3200
2800
2400
2000
1800
1600
1400
1200
1000
800
WAVE NUMBER (cm$^{-1}$)

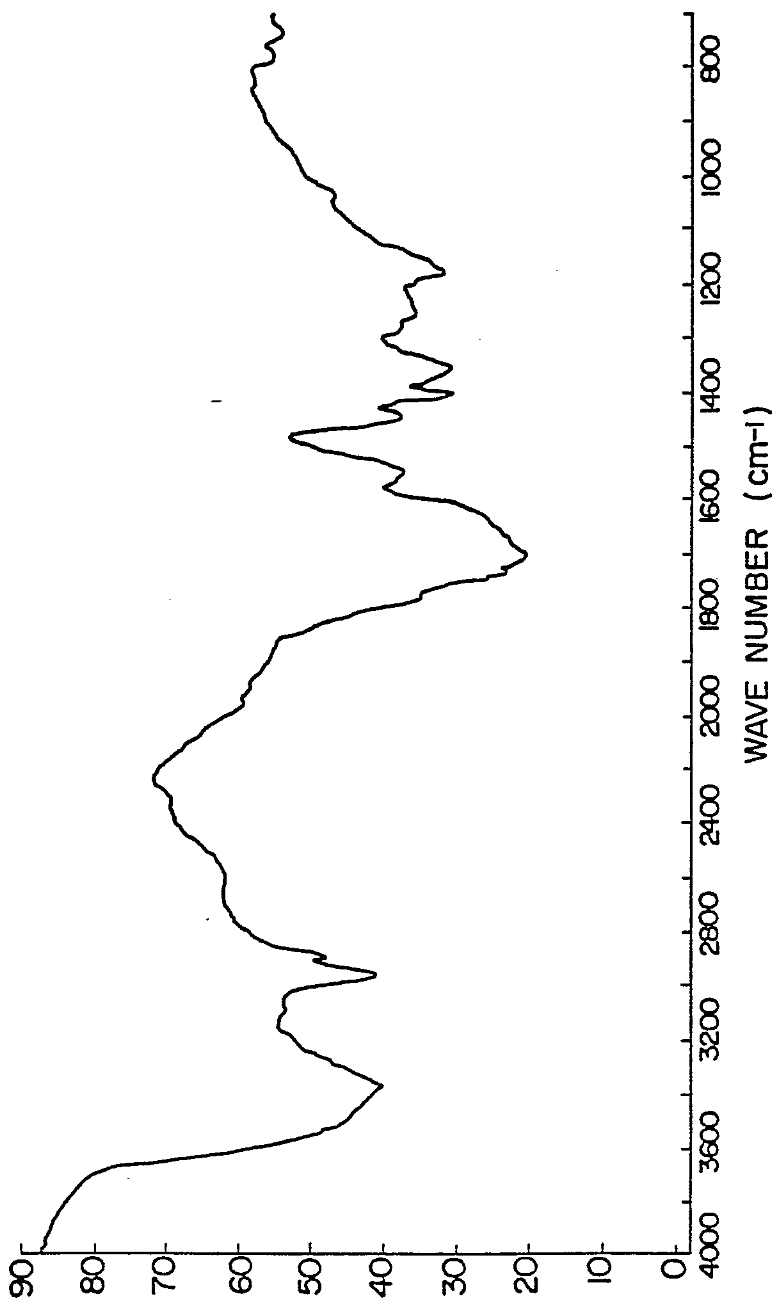
90
80
70
60
50
40
30
20
10
0
4000
3600
3200
2800
2400
2000
1800
1600
1400
1200
1000
800
WAVE NUMBER (cm-1)

FIG. 10

FIG. 11

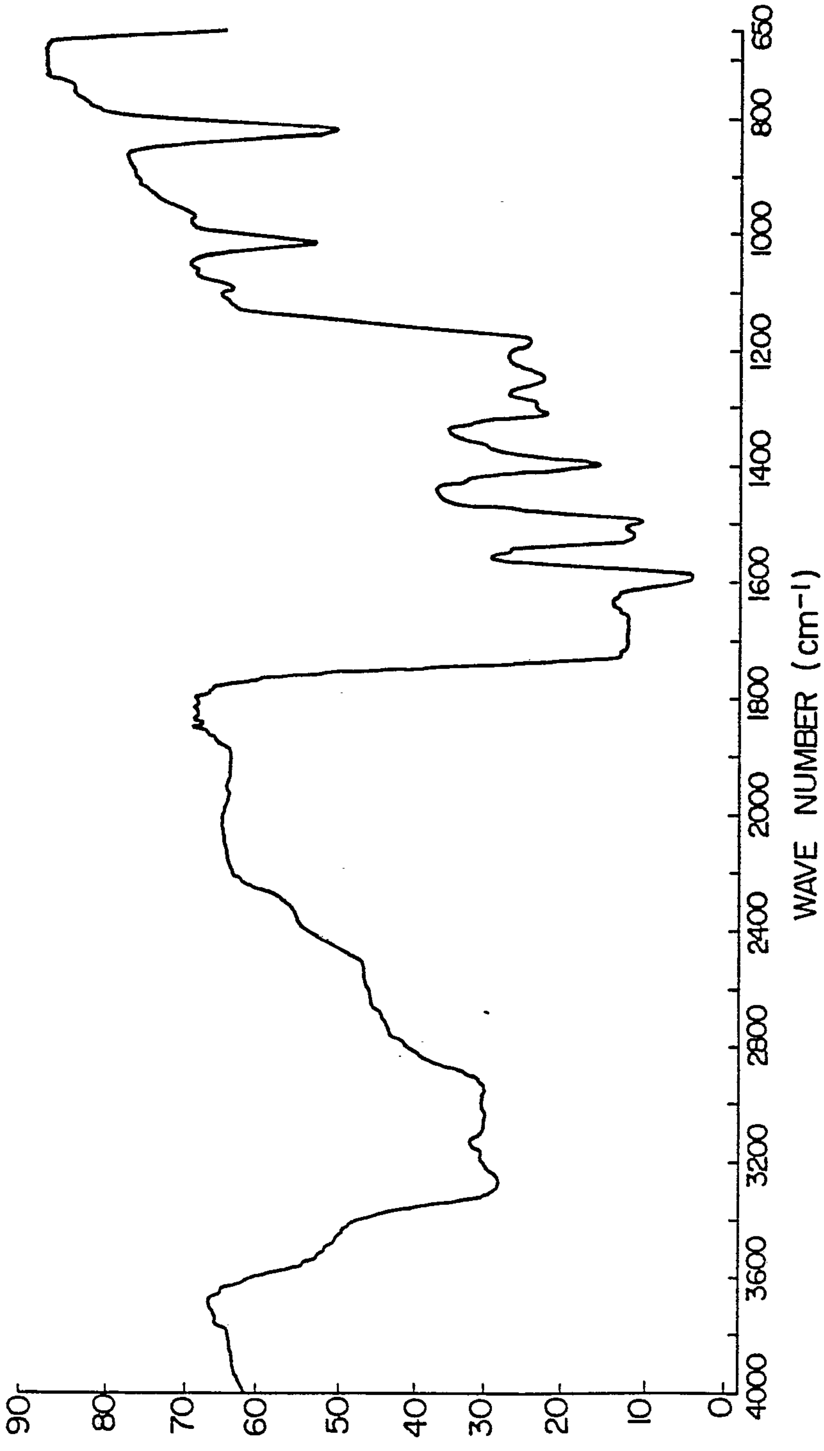
90
80
70
60
50
40
30
20
10
0
4000
3600
3200
2800
2400
2000
1800
1600
1400
1200
1000
800
650
WAVE NUMBER (cm$^{-1}$)

FIG. 12

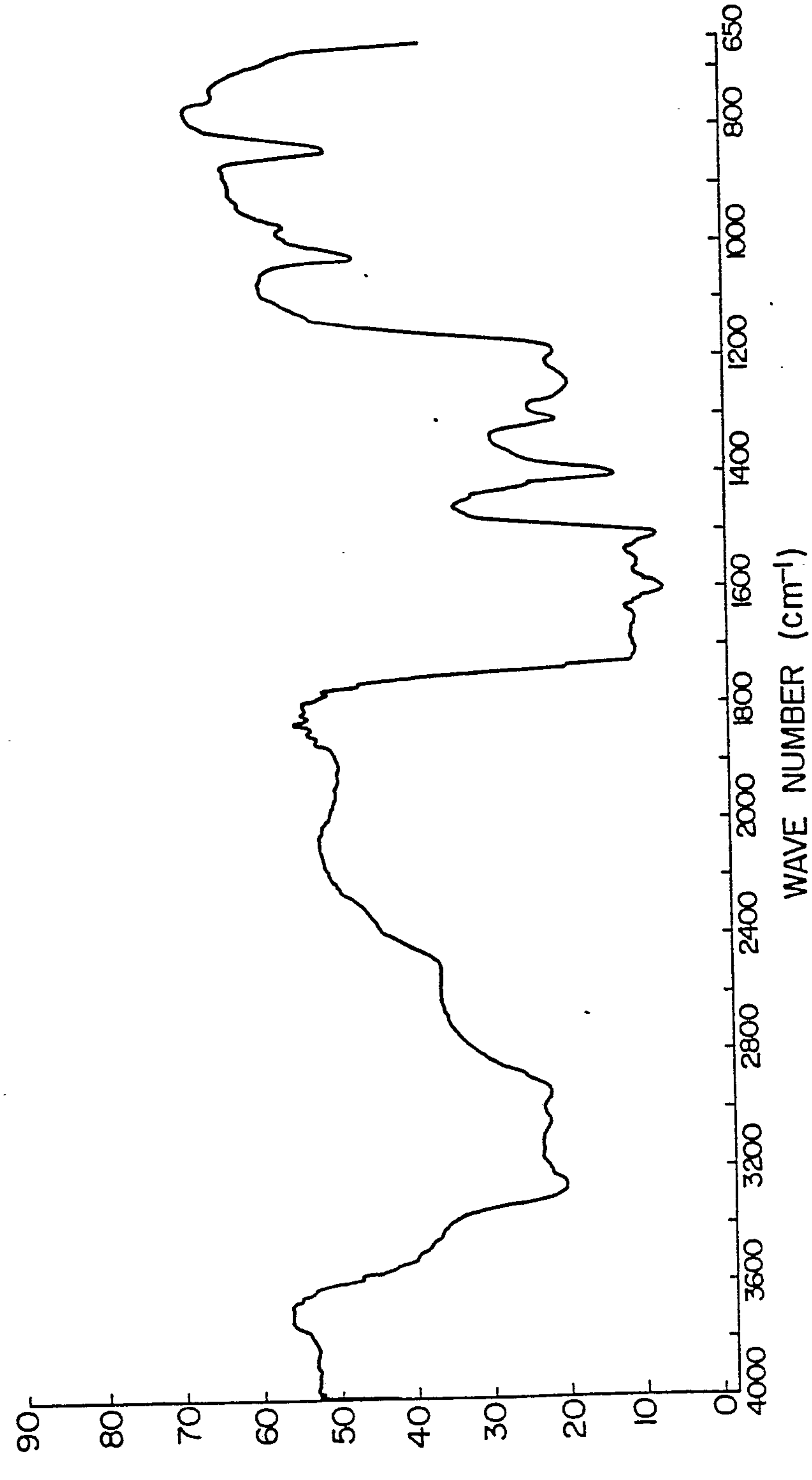
90
80
70
60
50
40
30
20
10
0
4000
3600
3200
2800
2400
2000
1800
1600
1400
1200
1000
800
650
WAVE NUMBER (cm-1)

FIG. 13

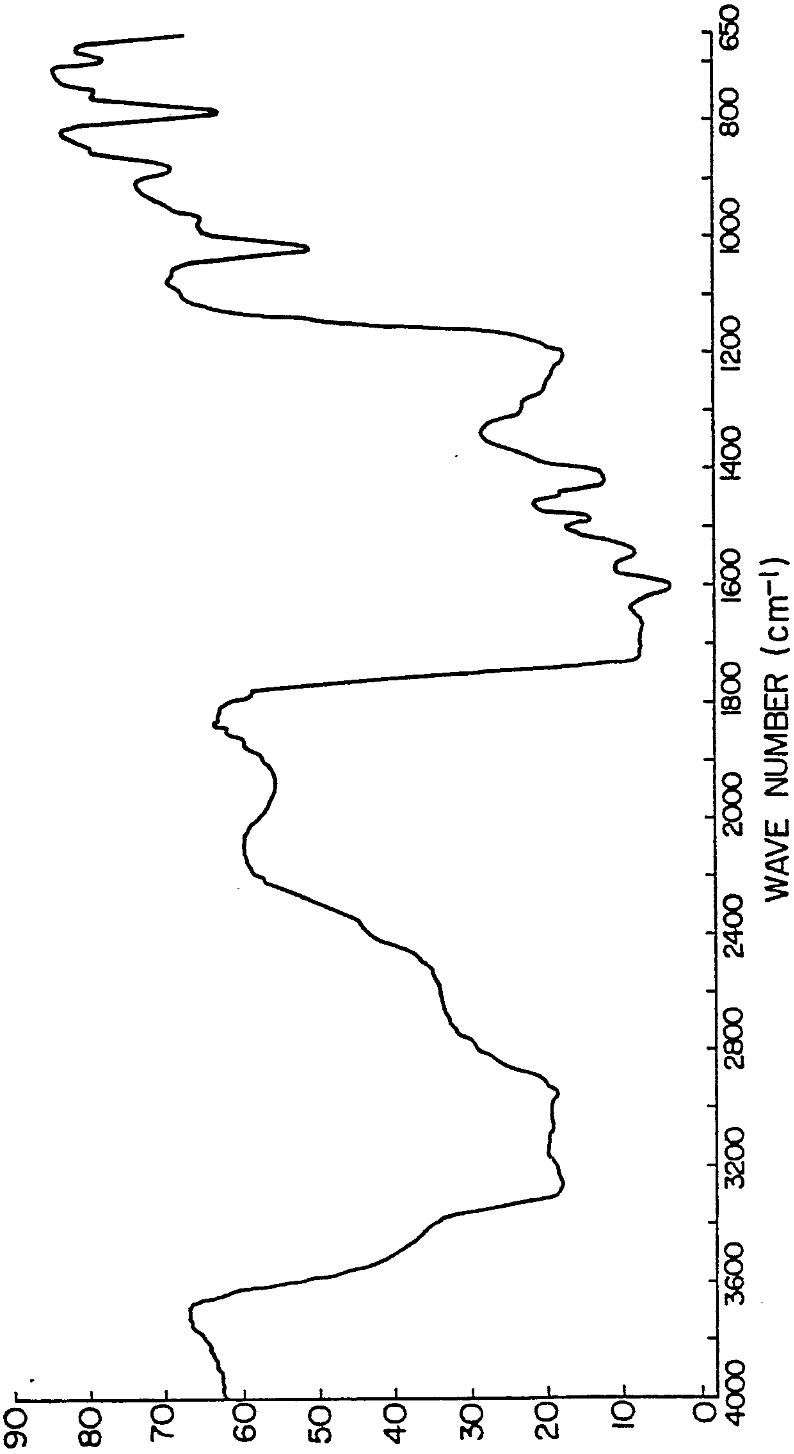
90
80
70
60
50
40
30
20
10
0
4000
3600
3200
2800
2400
2000
1800
1600
1400
1200
1000
800
650
WAVE NUMBER (cm⁻¹)

FIG. 14

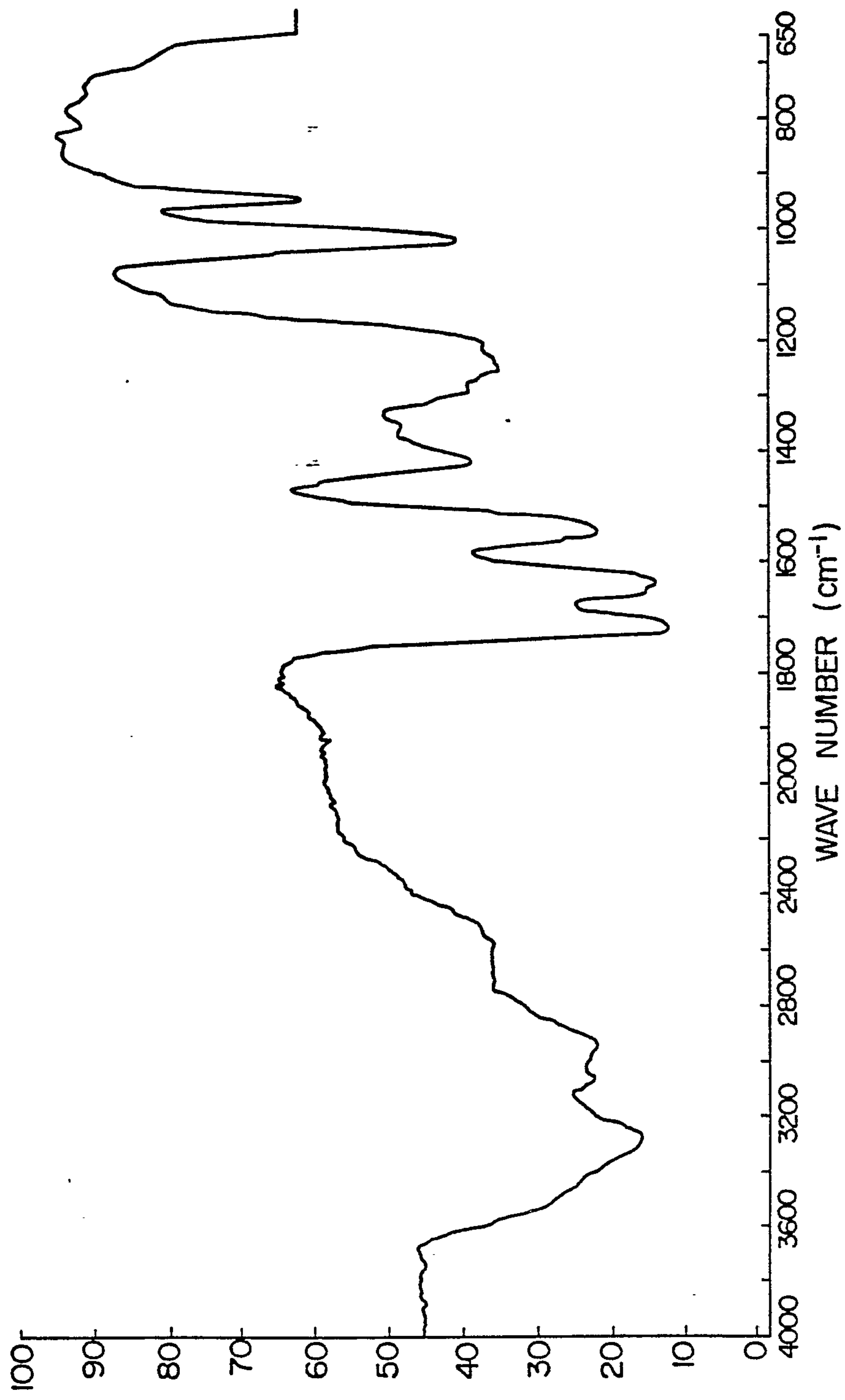
100
90
80
70
60
50
40
30
20
10
0
4000
3600
3200
2800
2400
2000
1800
1600
1400
1200
1000
800
650
WAVE NUMBER (cm⁻¹)

FIG. 15

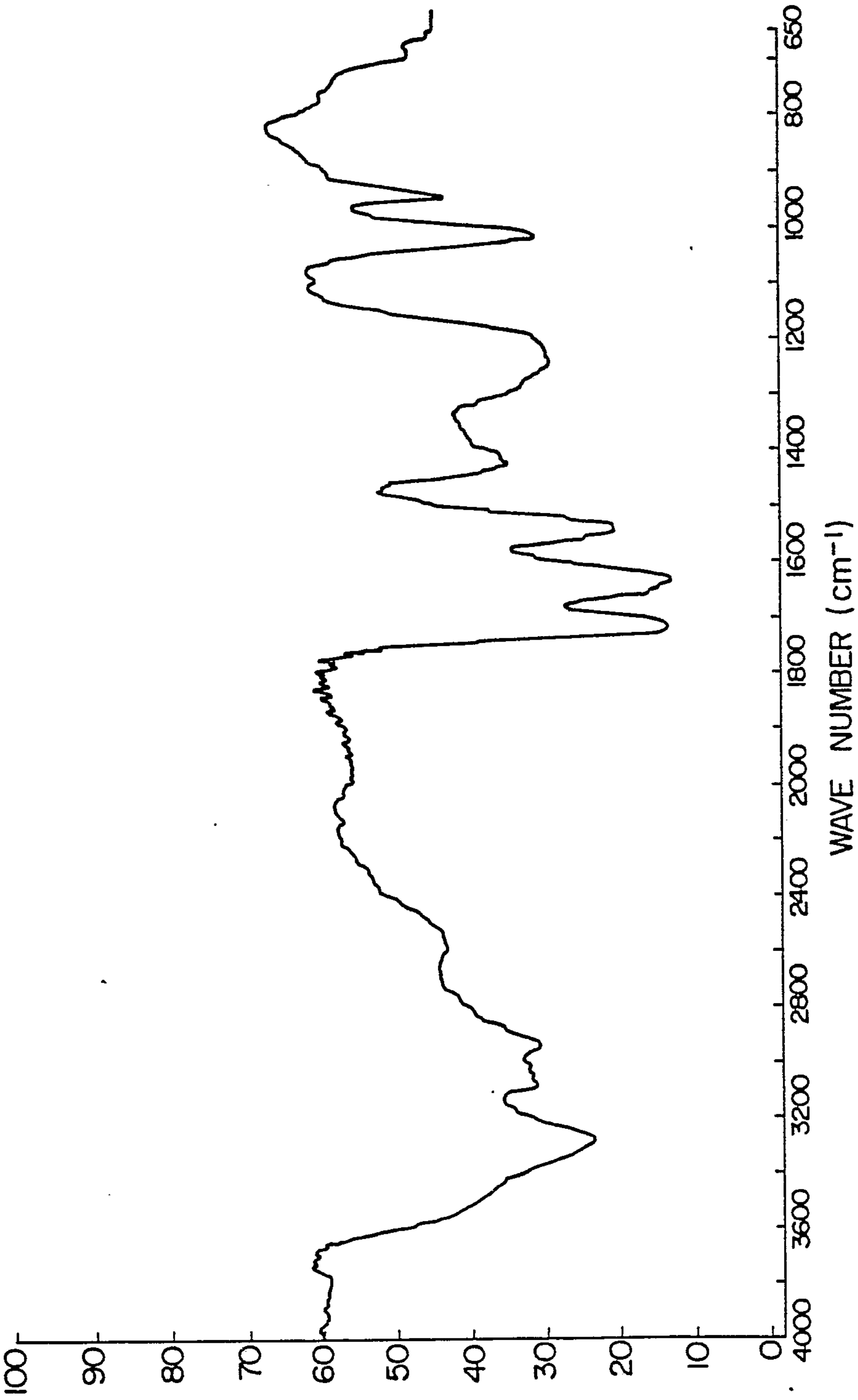
100
90
80
70
60
50
40
30
20
10
0
4000
3600
3200
2800
2400
2000
1800
1600
1400
1200
1000
800
650
WAVE NUMBER (cm⁻¹)